# EUROPEAN PATENT APPLICATION

(11) **EP 1 768 324 A1**
(43) Date of publication of application: **28.03.2007**
(21) Application number: 05749025.2
(22) Date of filing: 08.06.2005
(51) Int. Cl.: H04L 12/56

(54) **DISTRIBUTION DEVICE, RECEPTION DEVICE, TREE-TYPE DISTRIBUTION SYSTEM, INFORMATION PROCESSING METHOD, ETC.**

(30) Priority: 13.07.2004 JP 2004205497; 25.08.2004 JP 2004245180
(71) Applicant: Brother Kogyo Kabushiki Kaisha, Nagoya-shi, Aichi-ken 467-8561 (JP); Xing Inc., Nagoya-shi, Aichi 4670851 (JP)
(72) Inventor: HIBINO, Yoshihiko Brother Kogyo Kabushiki Kaisha, Aichi 4678561 (JP); KIYOHARA, Yuji Brother Kogyo Kabushiki Kaisha, Aichi 4678561 (JP); SUZUKI, Hiroaki Brother Kogyo Kabushiki Kaisha, Aichi 4678561 (JP); USHIYAMA, Kentaro Brother Kogyo Kabushiki Kaisha, Aichi 4678561 (JP); IIJIMA, Koichi c/o Xing Inc., Aichi 4670851 (JP)
(74) Representative: Kuhnen & Wacker
(86) International application number: PCT/JP2005/010519
(87) International publication number: WO 2006/006327

(57) **Abstract**

It is the object of the present invention to provide a processing apparatus, a tree-type network system, processing program and recording method that are capable of performing requests to a higher-order apparatus at the same time, while reducing the load that is concentrated in the communication path upstream in the network.

One node apparatus which is provided with tree-type network system including broadcasting apparatus sending inquiry information as request-reception-begin data etc. for requesting sending response message as select-node information etc. to a plurality of node apparatus, receiving inquiry information that is sent from other processing apparatus that is connected in a higher-order layer above the processing apparatus, transferring to other processing apparatuses that are connected in a lower-order layer below the processing apparatus, receiving the reply-result information that is sent from other processing apparatus, creating its reply-result information based on own processing apparatus, and replying created reply-result information based on reply information included in reply-result-information and created reply information to other processing apparatus that is connected in a higher-order layer.

## Description

### Technical Field

This invention relates to a Peer-to-Peer (P2P) type distribution system, and more particularly to a tree-type distribution system and method thereof in which a plurality of levels are formed with a distribution apparatus that distributes information being the highest level and a plurality of node apparatuses being connected to the distribution apparatus in a tree shape via a plurality of communication paths, and where the distribution information that is distributed by that distribution apparatus is distributed in order from the higher-level nodes to lower-level nodes. This invention relates to a processing apparatus or the like in a Peer-to-Peer (P2P) type network system that transmits reply information to a highest-order apparatus in response to an inquiry from that highest-order apparatus.

### Background Art

This system is a so-called Peer-to-Peer type data contents distribution system, and it differs from a client-server type data contents distribution system in that data contents that are distributed by streaming are transmitted or received between node apparatuses as clients.

A distribution system for stream data is disclosed in patent document 1 as an example of this kind of system, and in that system, each node apparatus has topology information for identifying the network connection relationship, and by using the topology information, each node apparatus is able to connect to an identified upstream (higher-order) node apparatus, receive stream data that is transmitted from that upstream node apparatus, and transfer (relay) that stream data to a downstream (lower-order) node apparatus. By doing this, it is possible to prevent access from being concentrated on a certain computer such as a server.
[Patent Document 1]
Japanese patent application 2003-169089

### Disclosure of the Invention

### Problems to be Solved by the Invention

Deleted However, in a bidirectional communication service that uses this kind of tree-type distribution system, when the distribution apparatus collects response messages from each of the node apparatuses in response to an inquiry message that was distributed by the distribution apparatus to each of the node apparatuses, a method is feasible in which those responses are transferred sequentially toward the distribution apparatus at the highest level.

However, in this method, in the case that a large number of node apparatuses send a response message at the same time, a problem occurs in that those response messages accumulate in a short period of time at a node apparatus in a higher level or at the distribution apparatus. Particularly, in the case where the up and down communication bandwidths of the communication lines between each of the node apparatuses is an asymmetrical ADSL (Asymmetric Digital Subscriber Line) line, the communication bandwidth in the up direction (direction toward higher-level node apparatuses) is narrower than the communication bandwidth in the down direction (direction toward the lower-level node apparatuses), so there is a high possibility that delays in the transmission of the response messages will occur. Therefore, when there is a set time limit for collecting the response messages from the node apparatuses, there is a problem in that it may not be possible for response messages from node apparatuses that use a communication line having this kind of transmission delay to reach the distribution apparatus on time, and thus it is not possible to obtain the merits of a bidirectional communication service. Deleted

Also, as the second problem to be solved, when this kind of computer-network system is applied to a request procedure in which a broadcasting apparatus sends request-reception information to downstream node apparatuses, and the downstream node apparatuses send requests all together to the broadcasting apparatus, in the case where the broadcasting apparatus and node apparatuses form a wide IP (Internet Protocol) network and the downstream nodes send requests to the broadcasting apparatus at the same time, problems occur in that a large communication load occurs in the upstream (higher-order) communication path of the IP network, the network load becomes large (in other words, the frequency that the upstream IP routers and communication lines of the network are used becomes high), and the processing load by the upstream node apparatuses becomes large.

Taking the aforementioned problems into consideration, the object of the present invention is to provide a distribution apparatus, receiving apparatus, tree-type distribution system and information-processing method in a distribution having tree configuration that are capable of collecting response messages more efficiently.

Also, taking the aforementioned 2nd problem into consideration, it is the object of the present invention to provide a processing apparatus, a tree-type network system, processing program and recording method that are capable of performing requests to a higher-order apparatus at the same time, while reducing the load that is concentrated in the communication path upstream in the network, and at an upstream node apparatus.

### Means For Solving The Problems

The present invention recited in Claim 1 for solving the problems is directed to a distribution apparatus that distributes distribution information and that is part of a tree-type distribution system made up of said distribution apparatus and a plurality of receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, is provided with: a first distribution-information-distribution means for distributing first distribution information so that said first distribution information that includes an inquiry message is distributed to said receiving apparatuses on a plurality of communication paths; a receiving-apparatus-selection means for selecting one said receiving apparatus that is connected to said distribution apparatus and to which second distribution information that includes a collection message for collecting response messages that correspond to said inquiry message that are generated by each said receiving apparatus is to be distributed; a second distribution-information-distribution means for distributing said second distribution information to said selected one receiving apparatus so that said second distribution information is transferred in order via one communication path from among said plurality of communication paths ; and a collected-information-receiving means for receiving collected information that is sent from one of said receiving apparatuses on one of said communication paths along which said second distribution information is transferred in order and that includes said collection message to which said response message that was attached by said receiving apparatus on that one communication path is added.

With the invention according to claim 1, construction is such that after first distribution information that includes an inquiry message has been distributed to receiving apparatuses on a plurality of communication paths, second distribution information, which includes a collection message for collecting response messages for that inquiry message, is distributed so that it is transferred in order via one communication path (route) from among the plurality of communication paths, and collected information, which includes the collection message to which a response message from a receiving apparatus on that communication path has been added, is transferred (returned) in order from that one receiving apparatus on the one communication path, over which that second distribution information is transferred in order, to the distribution apparatus, so it is possible to collect response messages more efficiently, and it is possible to reduce communication traffic in the up direction of the over tree-type distribution system.

The present invention recited in Claim 2 for solving the problems is directed to the distribution apparatus of claim 1 wherein said receiving-apparatus selection means selects one of said receiving apparatuses from among a plurality of receiving apparatuses that are connected to said distribution apparatus by a probability that is proportional to the number of receiving apparatuses located in the levels below each of said receiving apparatuses.

With the invention according to claim 2, a receiving apparatus to which the second distribution information is to be distributed is selected with a probability that is proportional to the number of receiving apparatuses located in the levels below each receiving apparatus, so it is possible to maintain fairness.

The present invention recited in Claim 3 for solving the problems is directed to the distribution apparatus of claim 1 or claim 2, wherein said collected information is sent from said receiving apparatus that is located in the lowest level of said one communication path.

The present invention recited in Claim 4 for solving the problems is directed to the distribution apparatus of any one of the claims 1 thru 3, is further provided with a message-collection-condition-judgment means for determining, based on said collected information, whether or not a specified message-collection condition has been satisfied ; wherein when said message-collection-condition-judgment means has determined that said message-collection condition has not been satisfied, said receiving-apparatus-selection means selects one of said receiving apparatuses that is connected to said distribution apparatus: and a said second distribution-information-distribution means distributes said second distribution information to said selected one receiving apparatus.

With the invention according to claim 4, the second distribution information is transferred to the selected receiving apparatuses until the message-collection condition is satisfied, so it is possible to reliably collect the desired response messages.

The present invention recited in Claim 5 for solving the problems is directed to the distribution apparatus of claim 4, wherein said receiving-apparatus-selection means selects one of said receiving apparatuses from among a the plurality of said receiving apparatuses that are connected to the distribution apparatus with a probability that is proportional to the number of said receiving apparatuses located in the levels below each said receiving apparatus.

With the invention according to claim 5, a receiving apparatus to which the second distribution information is to be distributed is selected with a probability that is proportional to the number of receiving apparatuses located in the levels below each receiving apparatus, so it is possible to maintain fairness.

The present invention recited in Claim 6 for solving the problems is directed to the distribution apparatus of claim 4 or claim 5, wherein said receiving-apparatus-selection means selects one receiving apparatus other than a receiving apparatus selected that was selected previously.

With the invention according to claim 6, a receiving apparatus other than a previously selected receiving apparatus is selected; so it is possible to maintain fairness.

The present invention recited in Claim 7 for solving the problems is directed to the distribution apparatus of claim 1 or claim 2, wherein said second distribution information contains information that indicates a specified message-collection condition; and said collected information is sent from said receiving apparatus on said communication path when that message-collection condition is satisfied.

With the invention according to claim 7, the collected information is sent from the receiving apparatus when the message-collection condition has been satisfied, so it is possible to collect response messages more efficiently.

The present invention recited in Claim 8 for solving the problems is directed to the distribution apparatus of any one of the claims 4 to 7, wherein said message-collection condition contains at least one of a condition that specifies the number of said response messages to be collected, a condition that specifies the number of valid answers included in said response message, and a condition that specifies the number of times said second distribution information is to be transferred.

The present invention recited in Claim 9 for solving the problems is directed to the distribution apparatus of any one of the claims 1 to 8, where in said response messages from said receiving apparatuses on said one communication path and ID information unique to each of said receiving apparatuses are correlated and attached to said collection message.

The present invention recited in Claim 10 for solving the problems is directed to a receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, is provided with: a first distribution-information-receiving means for receiving first distribution information that includes an inquiry message from said distribution apparatus or said receiving apparatus located in the level above ; a response-message-generation means for generating a response message for said inquiry message; a second distribution-information-receiving means for receiving second distribution information that includes a collection message for collecting said response message from said distribution apparatus or said receiving apparatus that is located in the level above: a response-message-adding means for adding said generated response message to a collection message that is included in said second distribution information; a lower-level-judgment means for determining whether or not there is another connected said receiving apparatus in the level below ; and a collected-information-transmission means for sending collected information that includes said collection message to which said response messages have been added to said distribution apparatus.

With the invention according to claim 10, a receiving apparatus that received the first distribution information generates a response message in response to the inquiry message that is included in that first distribution information, and adds that generated response message to a collection message that is included in received second distribution information, and when there is no other receiving apparatus connected in the level below that receiving apparatus, directly sends the collected information that includes that collection message to the distribution apparatus, so it is possible to send response messages to the distribution apparatus more efficiently, and it is possible to reduce the communication traffic in the up direction in overall tree-type distribution system.

The present invention recited in Claim 11 for solving the problems is directed to a receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, is provided with: a first distribution-information-receiving means for receiving first distribution information that includes an inquiry message from said distribution apparatus or said receiving apparatus located in the level I above; a response-message-generation means for generating a response message for said inquiry message: a second distribution-information-receiving means for receiving second distribution information that includes a collection message for collecting said response message from said distribution apparatus or said receiving apparatus that is located in the level above, and information indicating a specified message-collection condition: a response-message-adding means for adding said generated response message to a collection message that is included in said second distribution information: a message-collection-condition-judgment means for determining whether or not said specified message-collection condition that is included in said second distribution information is satisfied: and a collected-information-transmission means for directly sending collected information that includes said collection message to which said response messages have been added to said distribution apparatus when said message-collection-condition-judgment means determined that said message-collection condition was satisfied.

With the invention according to claim 11, a receiving apparatus that received the first distribution information generates a response message in response to the inquiry message that is included in that first distribution information, and adds that generated response message to a collection message that is included in received second distribution information, and when a specified message-collection condition that is included in the second distribution information is satisfied, directly sends the collected information that includes that collection message to the distribution apparatus, so it is possible to send response messages to the distribution apparatus more efficiently, and it is possible to reduce the communication traffic in the up direction in the overall tree-type distribution system.

The present invention recited in Claim 12 for solving the problems is directed to the receiving apparatus of claim 11 is further provided with: a lower-level-judgment means for determining whether or not there is another connected said receiving apparatus in the level below when said message-collection-condition-judgment means determined that said message-collection condition is not satisfied; and a collected-information-transmission means for sending collected information that includes said collection message to which said response messages have been added to said distribution apparatus when said lower-level-judgment means determined that another said receiving apparatus is not connected.

The present invention recited in Claim 13 for solving the problems is directed to the receiving apparatus of claim 10 or claim 12 is further provided with: a receiving-apparatus-selection means for selecting one said receiving apparatus that is connected in the level below said receiving apparatus to which collected information that includes said collection message to which said response messages have been added, when said lower-level-judgment means determined that there is another connected receiving apparatus in the level below: and a collected-information-transfer means for transferring said collected information to said selected receiving apparatus.

The present invention recited in Claim 14 for solving the problems is directed to the receiving apparatus of claim 13, wherein said receiving-apparatus-selection means selects one said receiving apparatus from among a plurality of said receiving apparatuses that are connected in the level below said receiving apparatus with a probability that is proportional to the number of said receiving apparatuses that are located in the levels below each said receiving apparatus.

The present invention recited in Claim 15 for solving the problems is directed to the receiving apparatus of claim 13 or 14, wherein said receiving-apparatus-selection means selects another said receiving apparatus that is not a previously selected receiving.

The present invention recited in Claim 16 for solving the problems is directed to the receiving apparatus of any one of the claims 11 to 15, wherein said message-collection condition contains at least one of a condition that specified the number of said response messages to be collected, a condition that specifies the number of valid answers included in said response message, and a condition that specifies the number of times said second distribution information is to be transferred.

The present invention recited in Claim 17 for solving the problems is directed to the receiving apparatus of any one of the claims 10 to 16, wherein said response-message-adding means correlates said generated response message with ID information unique to that receiving apparatus and adds them to said collection message that is included in said second distribution information.

The present invention recited in Claim 18 for solving the problems is directed to an information-processing method for a distribution apparatus that distributes distribution information and that is part of a tree-type distribution system made up of said distribution apparatus and a plurality of receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, is provided with steps of: distributing first distribution information so that said first distribution information that includes an inquiry message is distributed to said receiving apparatuses on a plurality of communication paths: selecting one said receiving apparatus that is connected to said distribution apparatus and to which second distribution information that includes a collection message for collecting response messages corresponding to said inquiry message that are generated by each said receiving apparatus is to be distributed: distributing said second distribution information to said selected one receiving apparatus so that said second distribution information is transferred in order via one communication path from among said plurality of communication paths: and receiving collected information that is sent from one of said receiving apparatuses on one of said communication paths along which said second distribution information is transferred in order and that includes said collection message to which said response message that was attached by said receiving apparatus on that one communication path is added.

The present invention recited in Claim 19 for solving the problems is directed to an information processing method for a receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, is provided with steps of: receiving first distribution information that includes an inquiry message from said distribution apparatus or said receiving apparatus located in the level above: generating a response message for said inquiry message; receiving second distribution information that includes a collection message for collecting said response message from said distribution apparatus or said receiving apparatus that is located in the level above: adding said generated response message to a collection message that is included in said second distribution information; determining whether or not there is another connected said receiving apparatus in the level below: and sending collected information that includes said collection message to which said response messages have been added to said distribution apparatus.

The present invention recited in Claim 20 for solving the problems is directed to an information processing method for a receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, is provided with steps of: receiving first distribution information that includes an inquiry message from said distribution apparatus or said receiving apparatus located in the level above: generating a response message for said inquiry message: receiving second distribution information that includes a collection message for collecting said response message from said distribution apparatus or said receiving apparatus that is located in the level above, and information indicating a specified message-collection condition: adding said generated response message to a collection message that is included in said second distribution information: determining whether or not said specified message-collection condition that is included in said second distribution information is satisfied: and sending collected information that includes said collection message to which said response messages have been added to said distribution apparatus when said message-collection-condition-judgment means determined that said message-collection condition was satisfied.

The present invention recited in Claim 21 for solving the problems is directed to an information processing program that makes a computer in a distribution apparatus that distributes distribution information and that is part of a tree-type distribution system made up of said distribution apparatus and a plurality of receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, function as: a first distribution-information-distribution means for distributing first distribution information so that said first distribution information that includes an inquiry message is distributed to said receiving apparatuses on a plurality of communication paths: a receiving-apparatus-selection means for selecting one said receiving apparatus that is connected to said distribution apparatus and to which second distribution information that includes a collection message for collecting response messages that correspond to said inquiry message that are generated by each said receiving apparatus is to be distributed: a second distribution-information-distribution means for distributing said second distribution information to said selected one receiving apparatus so that said second distribution information is transferred in order via one communication path from among said plurality of communication paths: and a collected-information-receiving means for receiving collected information that is sent from one of said receiving apparatuses on one of said communication paths along which said second distribution information is transferred in order and that includes said collection message to which said response message that was attached by said receiving apparatus on that one communication path is added.

The present invention recited in Claim 22 for solving the problems is directed to an information processing program that makes a computer in a receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, function as: a first distribution-information-receiving means for receiving first distribution information that includes an inquiry message from said distribution apparatus or said receiving apparatus located in the level above; a response-message-generation means for generating a response message for said inquiry message: a second distribution-information-receiving means for receiving second distribution information that includes a collection message for collecting said response message from said distribution apparatus or said receiving apparatus that is located in the level above: a response-message-adding means for adding said generated response message to a collection message that is included in said second distribution information ; a lower-level-judgment means for determining whether or not there is another connected said receiving apparatus in the level below: and a collected-information-transmission means for sending collected information that includes said collection message to which said response messages have been added to said distribution apparatus.

The present invention recited in Claim 23 for solving the problems is directed to an information processing program that makes a computer in a receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, function as: a first distribution-information-receiving means for receiving first distribution information that includes an inquiry message from said distribution apparatus or said receiving apparatus located in the level above ; a response-message-generation means for generating a response message for said inquiry message: a second distribution-information-receiving means for receiving second distribution information that includes a collection message for collecting said response message from said distribution apparatus or said receiving apparatus that is located in the level above, and information indicating a specified message-collection condition: a response-message-adding means for adding said generated response message to a collection message that is included in said second distribution information; a message-collection-condition-judgment means for determining whether or not said specified message-collection condition that is included in said second distribution information is satisfied; and a collected-information-transmission means for directly sending collected information that includes said collection message to which said response messages have been added to said distribution apparatus when said message-collection-condition-judgment means determined that said message-collection condition was satisfied.

The present invention recited in Claim 24 for solving the problems is directed to a recording medium on which said information-processing program of any one of the claims 21 to 23 is recorded so that it can be read by a computer.

The present invention recited in Claim 25 for solving the problems is directed to a tree-type distribution system comprising a distribution apparatus that distributes distribution information and a plurality of receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, wherein said distribution apparatus is provided with: a first distribution-information-distribution means for distributing first distribution information so that said first distribution information that includes an inquiry message is distributed to said receiving apparatuses on a plurality of communication paths; a receiving-apparatus-selection means for selecting one said receiving apparatus that is connected to said distribution apparatus and to which second distribution information that includes a collection message for collecting response messages that correspond to said inquiry message is to be distributed; and a second distribution-information-distribution means for distributing said second distribution information to said selected one receiving apparatus: and said receiving apparatus is provided with: a first distribution-information-receiving means for receiving first distribution information from said distribution apparatus or said receiving apparatus located in the level above; a response-message-generation means for generating a response message for said inquiry message; a second distribution-information-receiving means for receiving second distribution information from said distribution apparatus or said receiving apparatus that is located in the level above: a response-message-adding means for adding said generated response message to a collection message that is included in said second distribution information: a lower-level-judgment means for determining whether or not there is another connected said receiving apparatus in the level below; and a collected-information-transmission/transfer means for sending collected information that includes said collection message to which said response messages have been added to said distribution apparatus when said lower-level-judgment means has determined that said other receiving apparatus is not connected, and transferring said collected information that includes said collection message to which said response messages have been added to one of said receiving apparatuses that is connected in the level below.

The present invention recited in Claim 26 for solving the problems is directed to a tree-type distribution system is provided with a distribution apparatus that distributes distribution information and a plurality of receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, wherein said distribution apparatus is provided with: a first distribution-information-distribution means for distributing first distribution information so that said first distribution information that includes an inquiry message is distributed to said receiving apparatuses on a plurality of communication paths: a receiving-apparatus-selection means for selecting one said receiving apparatus that is connected to said distribution apparatus and to which second distribution information that includes a collection message for collecting response messages that correspond to said inquiry message and information indicating a specified message-collected condition is to be distributed; and a second distribution-information-distribution means for distributing said second distribution information to said selected one receiving apparatus: and said receiving apparatus is provided with: a first d istribution-information-receiving means for receiving first distribution information from said distribution apparatus or said receiving apparatus located in the level above; a response-message-generation means for generating a response message for said inquiry message; a second distribution-information-receiving means for receiving said second distribution information from said distribution apparatus or said receiving apparatus that is located in the level above: a response-message-adding means for adding said generated response message to a collection message that is included in said second distribution information: a message-collection-condition-judgment means for determining whether or not said specified message-collection condition that is included in said second distribution information is satisfied: and a collected-information-transmission/transfer means for sending collected information that includes said collection message to which said response messages have been added to said distribution apparatus when said message-collection-condition-judgment means determined that said message-collection condition was satisfied, and transferring said collected information that includes said collection message to which said response messages have been added to one of said receiving apparatuses that is connected in the level below when said message-collection-condition-judgment means determined that said message-collection condition was not satisfied.

The present invention recited in Claim 27 for solving the problems is directed to a processing apparatus in a tree-type network system that is provided with an inquiry apparatus that sends inquiry information requesting that reply-result information be sent, and a plurality of processing apparatuses that receive said inquiry information, where said inquiry apparatus is connected to said plurality of processing apparatuses in a tree shape via communication paths so that said inquiry apparatus is the highest and said plurality of processing apparatuses form a plurality of layers, and said inquiry information that is sent from said inquiry apparatus is successively transferred from said processing apparatuses in a higher order to said processing apparatuses in a lower order, wherein one of said processing apparatuses is provided with: an inquiry-information-receiving means for receiving said inquiry information that is sent from another said processing apparatus that is connected in a higher-order layer above said one processing apparatus or from said inquiry apparatus; an inquiry-information-transfer means for transferring said received inquiry information to one or more of said other processing apparatuses that are connected in a lower-order layer below said one processing apparatus; a reply-result-information-receiving means for receiving said reply-result information that includes reply information for said inquiry information and that is sent from at least one or more of said other processing apparatuses that are connected in said lower-order layer; a reply-information-creation means for said one processing apparatus to create its own said reply-result information for said inquiry information; a reply-result-information-creation means for said one processing apparatus to create its own reply-result information based on reply-result information received by said reply-result-information-receiving means, and reply information created by said reply-information-creation means; and a reply-result-information-reply means for sending said created reply-result information to another said processing apparatus or inquiry apparatus that is connected in a higher-order layer and that is the transmission source of inquiry information that was received by said inquiry-information-receiving means.

Accordingly, construction is such that new reply-result information is created based on the reply-result information that is sent from processing apparatuses that are connected in the lower-order layer directly below, and then sent to the higher-order layer, so it is possible to reduce the concentration of loads in the upstream communication paths of a network (for example, a certain IP router, etc.), and thus it is possible to improve the operating efficiency of the system.

The present invention recited in Claim 28 for solving the problems is directed to the processing apparatus of claim 27 is further provided with a selection means for selecting a specified number of items of said reply information from among reply information that is included in said reply-result information that is received by said reply-result-information-receiving means, and reply information that is created by said reply-result-information-creation means; wherein said reply-result-information-creation means creates said reply-result information that includes said selected specified number of items of said reply information.

Accordingly, inquiry information is sent from the inquiry apparatus, and when that inquiry apparatus selects a specified number of items of reply information from among items of reply information that are included in items of reply-result information and created rely information for the inquiry information that was sent from downstream processing apparatuses, construction is such that each of the downstream apparatuses selects a specified number of items of reply information from among items of reply information that were included in reply-result information from processing apparatuses connected in the lower-order layer directly below, and reply information that was created by a creation means of that processing apparatus itself, then includes them in reply-result information which it sends to a processing apparatus or the inquiry apparatus that is connected in the higher-order layer directly above, so the inquiry apparatus only needs to select a specified number of items of reply information from the items of reply information that are included in the items of reply-result information that are sent from each of the processing apparatuses connected in the lower-order layer directly below, and thus selection of reply information can be performed more efficiently.

The present invention recited in Claim 29 for solving the problems is directed to the processing apparatus of claim 28 is further provided with: a total-number-information-acquisition means for acquiring the sum of the total number of said other processing apparatuses connected in said lower-order layer plus '1' as total-number information: and a total-number-information-transmission means for sending said total-number information to said other processing apparatus or said inquiry apparatus that is the transmission source of inquiry information that was received by said inquiry-information-receiving means and that is connected in said higher-order layer: wherein said selection means selects said specified number of items of reply information based on said total-number information that was sent from said other processing apparatuses that are connected in said lower-order layer.

Accordingly, when a processing apparatus selects a specified number of items of reply information from among items of reply information from each of the processing apparatuses that are connected in the lower-order layer directly below, and from reply information that was created by that processing apparatus itself, and then sends those items of reply information to the processing apparatus connected in the higher-order layer directly above, construction is such that total-number information that indicates how many items of reply information the items of reply information were selected from is sent, so when selecting a specified number of items of reply information from among the items of reply information that were sent from each of the processing apparatuses connected in the lower-order layer directly below, it is possible to select a specified number of items of reply information taking into consideration the weighting of each, and thus construction is possible in which the items of reply information created by all of the processing apparatuses are selected equally.

The present invention recited in Claim 30 for solving the problems is directed to the processing apparatus of claim 29 is wherein said total-number-information-transmission means sends said total-number information when said reply-result-information-reply means sends said reply-result information.

Accordingly, when a processing apparatus selects a specified number of items of reply information and sends those items to a processing apparatus that is connected in the higher-order layer directly above, construction is such that those items are sent together with total-number information that indicates how many items of reply information the selected items were selected from, so when selecting a specified number of items of reply information, it is possible to select a specified number of items of reply information quickly by taking into consideration the weighting of each.

The present invention recited in Claim 31 for solving the problems is directed to the processing apparatus of any one of the claims 27 to 30 is further provided with: an end-information-receiving means for receiving end information from said other processing apparatus or from said inquiry apparatus that is connected in said higher-order layer and that gives an instruction to end the receiving of answer information to said inquiry information; and an answer-information-input -receiving means for receiving input of said answer information from when said inquiry information is received by said inquiry-information-receiving means until said end information is received by said end-information-receiving means ;
wherein said reply-information-creation means creates said reply information based on input of said answer information that is received by said answer-information-input-receiving means.

Accordingly, construction is such that request-reception-end data is received separately from inquiry information from the inquiry apparatus, so it becomes possible for all of the downstream apparatuses to input answer information for the same period of time without receiving the effect of communication-delay time or the like.

The present invention recited in Claim 32 for solving the problems is directed to the processing apparatus of any one of the claims 27 to 31 is further provided with a wait-time-setting means for setting receiving-wait time for receiving said reply-result information from said other processing apparatuses that are connected in said lower-order layer:
wherein said reply-result-information-creation means creates reply-result information for said one processing apparatus itself based on said reply-result information that was received by said reply-result-information-receiving means within said receiving-wait time.

Accordingly, reception divided by an arbitrary amount of time becomes possible without having to wait a long time for all of the processing apparatuses connected in the lower-order layer directly below to send reply-result information, and even when some kind of trouble occurs in a processing apparatus connected in a lower-order layer or in the communication network, it is possible to prevent adverse effects to the entire system.

The present invention recited in Claim 33 for solving the problems is directed to the processing apparatus of anyone of the claims 28 to 32 is further provided with a judgment means for determining whether or not reply information that was created by said reply-information-creation means corresponds to inquiry information that was received by said inquiry-information-receiving means: wherein said selection means removes reply information that was created by said reply-information-creation means as an object of selection when it was determined that the reply information does not correspond with said inquiry information, and selects said specified number of items of reply information only from reply information that is included in reply-result information that was received by said reply-result-information-receiving means.

Accordingly, in the case where the inquiry information that was sent from the inquiry apparatus is for a quiz, construction can be such that the inquiry information is sent together with the correct answer, so that when an item of created reply information does not match the correct answer to the quiz, that item of reply information is removed as an object of selection. In this way, a viewer/listener-participation type of quiz is possible.

The present invention recited in Claim 34 for solving the problems is directed to a tree-type network system that is provided with an inquiry apparatus that sends inquiry information requesting that reply-result information be sent, and a plurality of processing apparatuses that receive said inquiry information, where said inquiry apparatus is connected to said plurality of processing apparatuses in a tree shape via communication paths so that said inquiry apparatus is the highest and said plurality of processing apparatuses form a plurality of layers, and said inquiry information that is sent from said inquiry apparatus is successively transferred from said processing apparatuses in a higher order to said processing apparatuses in a lower order, wherein one of said processing apparatuses is provided with: an inquiry-information-receiving means for receiving said inquiry information that is sent from another said processing apparatus that is connected in a higher-order layer above said one processing apparatus or from said inquiry apparatus: an inquiry-information-transfer means for transferring said received inquiry information to said other processing apparatuses that are connected in a lower-order layer below said one processing apparatus: a reply-result-information-receiving means for receiving said reply-result information that includes reply information for said inquiry information and that is sent from said other processing apparatuses that are connected in said lower-order layer: a reply-information-creation means for said one processing apparatus to create its own said reply-result information for said inquiry information: a reply-result-information-creation means for said one processing apparatus to create its own reply-result information based on reply-result information received by said reply-result-information-receiving means, and reply information created by said reply-information-creation means; and a reply-result-information-reply means for sending said created reply-result information to another said processing apparatus or to said inquiry apparatus that is connected in a higher-order layer and that is the transmission source of inquiry information that was received by said inquiry-information-receiving means: wherein said inquiry apparatus is provided with: an inquiry- information-transmission means for sending said inquiry information to at least one or more of said processing apparatuses that are connected in a lower-order layer below said inquiry apparatus: and a reply-result-information means for receiving said reply-result information that is sent from at least one or more of said processing apparatuses that are connected in said lower-order layer.

The present invention recited in Claim 35 for solving the problems is directed to the tree-type network system of claim 34 wherein said processing apparatus is further provided with a selection means for selecting a specified number of items of said reply information from among reply information that is included in said reply-result information that is received by said reply-result-information-receiving means, and reply information that is created by said reply-result-information-creation means; and wherein said reply-result-information-creation means creates said reply-result information that includes said selected specified number of items of said reply information.

The present invention recited in Claim 36 for solving the problems is directed to the tree-type network system of claim 35 wherein said processing apparatus is further provided with: a total-number-information-acquisition means for acquiring the sum of the total number of said other processing apparatuses connected in said lower-order layer plus '1' as total-number information; and a total-number-information-transmission means for sending said total-number information to said other processing apparatus or said inquiry apparatus that is the transmission source of inquiry information that was received by said inquiry-information-receiving means and that is connected in said higher-order layer: and wherein said selection means selects said specified number of items of reply information based on said total-number information that was sent from said other processing apparatuses that are connected in said lower-order layer.

The present invention recited in Claim 37 for solving the problems is directed to a processing program for a computer that is contained in a processing apparatus in a tree-type network system that is provided with an inquiry apparatus that sends inquiry information requesting that reply-result information be sent, and a plurality of processing apparatuses that receive said inquiry information, where said inquiry apparatus is connected to said plurality of processing apparatuses in a tree shape via communication paths so that said inquiry apparatus is the highest and said plurality of processing apparatuses form a plurality of layers, and said inquiry information that is sent from said inquiry apparatus is successively transferred from said processing apparatuses in a higher order to said processing apparatuses in a lower order, wherein said program makes said computer of said processing apparatuses function as: an inquiry-information-receiving means for receiving said inquiry information that is sent from another said processing apparatus that is connected in a higher-order layer above said one processing apparatus or from said inquiry apparatus: an inquiry-information-transfer means for transferring said received inquiry information to one or more of said other processing apparatuses that are connected in a lower-order layer below said one processing apparatus ; a reply-result-information-receiving means for receiving said reply-result information that includes reply information for said inquiry information and that is sent from at least one or more of said other processing apparatuses that are connected in said lower-order layer; a reply-information-creation means for said one processing apparatus to create its own said reply-result information for said inquiry information; a reply-result-information-creation means for said one processing apparatus to create its own reply-result information based on reply-result information received by said reply-result-information-receiving means, and reply information created by said reply-information-creation means; and a reply-result-information-reply means for sending said created reply-result information to another said processing apparatus or inquiry apparatus that is connected in a higher-order layer and that is the transmission source of inquiry information that was received by said inquiry-information-receiving means.

The present invention recited in Claim 38 for solving the problems is directed to the processing program of claim 37 that further makes said computer function as a selection means for selecting a specified number of items of said reply information from among reply information that is included in said reply-result information that is received by said reply-result-information-receiving means, and reply information that is created by said reply-result-information-creation means: and makes said reply-result-information-creation means create said reply-result information that includes said selected specified number of items of said reply information.

The present invention recited in Claim 39 for solving the problems is directed to the processing program of claim 38 that further makes said computer function as: a total-number-information-acquisition means for acquiring the sum of the total number of said other processing apparatuses connected in said lower-order layer plus '1' as total-number information: and a total-number-information-transmission means for sending said total-number information to said other processing apparatus or said inquiry apparatus that is the transmission source of inquiry information that was received by said inquiry-information-receiving means and that is connected in said higher-order layer: and makes said selection means select said specified number of items of reply information based on said total-number information that was sent from said other processing apparatuses that are connected in said lower-order layer.

The present invention recited in Claim 40 for solving the problems is directed to a recording medium on which said processing program of any one of the claims 37 to 39 is recorded so that it can be read by said computer.

### Effects Of Invention

With this invention, second distribution information that includes a collection message for collecting response messages for an inquiry message is distributed so that it is sent in order over one communication path from among a plurality of communication paths, and collected information that includes the collection message to which a response messages have been added by receiving apparatuses on that communication path is sent from one receiving apparatus on one communication path to which that second distribution information was transferred in order to, to the distribution apparatus, so it is possible to collect response message more efficiently, and it is possible to reduce the communication traffic in the up direction of the overall tree-type distribution system.

With this invention, construction is such that after a processing apparatus creates and totals reply-result information for inquiry information, which was sent from the apparatus of the highest layer, based on items of reply-result information that were sent from each of the processing apparatuses connected in a lower-order layer, it sends that information to a processing apparatus that is connected in a higher-order layer, so it is possible to reduce the concentration of load in upstream communication paths and upstream processing apparatuses of a network, and thus it is possible to improve the operating efficiency of the system.

### BRIEF DESCRIPTION OF THE DRAWINGS

Fig. 1 is a drawing showing on example of the connected state of each apparatus in the tree-type distribution system of an embodiment of the present invention.
Fig. 2 is a drawing showing an example of the construction of a broadcast-station apparatus.
Fig. 3 is a drawing showing an example of the construction of a node apparatus.
Fig. 4A is a flowchart showing the process for distributing inquiry-message data that is performed by the control unit 11 of a broadcast-station apparatus 1.
Fig. 4B is a flowchart showing the process for receiving inquiry-message data that is performed by the control unit 21 of a node apparatus 2.
Fig. 5 is a flowchart showing the process for distributing collection-message data that is performed by the control unit 11 of a broadcast-station apparatus 1.
Fig. 6 is a flowchart showing the process for receiving collection-message data that is performed by the control unit 11 of a broadcast-station apparatus 1.
Fig. 7 is a flowchart showing the process for receiving and transferring co lection-message data that is performed by the control unit 21 of a node apparatus 2.
Fig. 8 is a drawing showing an example of the state of sending collection-message data when the message-collection conditions are met in the communication path K3.
Fig. 9 is a drawing showing an example of the state of sending collection-message data when the message-collection conditions are not met in the communication path K3.
Fig. 10 is a drawing showing an example of the state of redistributing collection-message data in order to satisfy the message-collection conditions.
Fig. 11 is a block diagram showing the construction of a tree-type network system S in the second embodiment.
Fig. 12 is a drawing explaining the construction of a broadcasting apparatus 201.
Fig. 13 is a drawing explaining the construction of a node apparatus 202.
Fig. 14 is a drawing explaining the sending and receiving of request-reception data and reply-result information Ans between a broadcasting apparatus 201 and node apparatus 202.
Fig. 15 is a flowchart showing the request-reception-data-transmission process performed by a control unit 211 of a broadcasting apparatus 201.
Fig. 16 is a flowchart showing the reply-result-information-transmission process that is performed by a control unit 221 of a node apparatus 202.
Fig. 17 is a drawing explaining the total-number information and select-node information that is stored in a memory unit 222 of a node apparatus 202.
Fig. 18 is a flowchart showing the reply-result-information-generation process by the control unit 221 of a node 202.
Fig. 19 is a drawing explaining the transmission process for sending reply-result information Ans to a broadcasting apparatus 201 in a tree-type network system S.

### Explanation Of Letters or Numerals

1 Broadcast-station apparatus
2 Node apparatus
3 System-management-server apparatus
10 Network
11 Control unit
12 Memory unit
13 Encoder unit
14 Communication unit
15 Bus
16 Decoder unit
21 Control unit
22 Memory unit
23 Buffer memory
24 Decoder unit
25 Video-processing unit
26 Display unit
27 Audio-processing unit
28 Speaker
29 Communication unit
29a input unit
30 Bus
31 Encoder unit
32 Video-processing unit
33 Camera
34 Audio-processing unit
35 Microphone
K Communication path
S Tree-type distribution system
201 Broadcasting apparatus
202 (202a, 202b, 202c, 202d, 202e, 202f, 202g, 202h, 202i, 202j, 202k, 202l, 202m, 202n, 202o, 202p) Node apparatus
203 (203a, 203b, 203c, 203d, 203e, 203f, 203g, 203h, 203i, 203j, 203k, 203l, 203m, 203n, 203o, 203p) Communication path
211 Control unit
212 Memory unit
213 Operation-input unit
214 Encoder unit
215 Communication unit
216 Bus
221 Control unit
222 Memory unit
223 Buffer memory
224 Decoder unit
225 Video-processing unit
226 Audio-processing unit
227 Operation-input unit
228 Communication unit
229 Bus
M Display unit
U Speakers
Rb Request-reception-begin data
Re Request-reception-end data
X Select-node information
N Total-number information
Ans Reply-result information
Tr Request-possible period
To Timeout time
M Total number of apparatuses
Su Number of node apparatuses 202 connected in the lower-order layer directly below

### Best Mode For Carrying Out The Invention

### The 1st embodiment

The preferred embodiments of the invention will be explained below based on the drawings. The embodiments described below are embodiments in which the present invention is applied to a tree-type distribution system.

### [1. Construction of a Tree-type Distribution System]

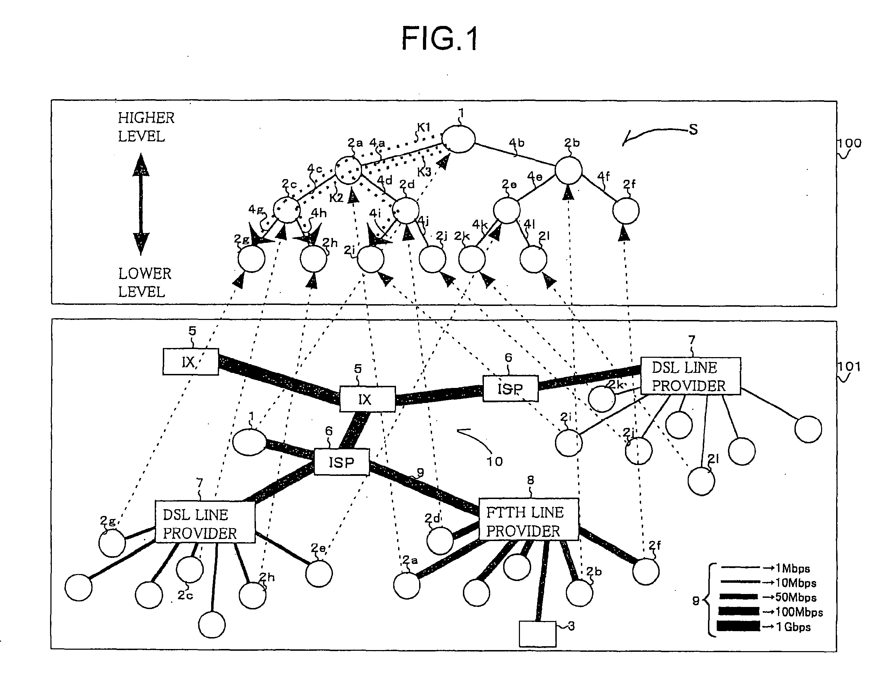

First, the construction of a tree-type distribution system will be explained with reference to Fig. 1.

Fig. 1 is a drawing showing an example of the connected state of apparatuses in the tree-type distribution system of the present invention. In the example shown in Fig. 1, the top frame 100 shows the electrical connection state of the apparatuses in a tree-type distribution system S (for example, the connection relationship between apparatuses where communication is established), and the bottom frame 101 shows the physical connection state among apparatuses that include the apparatuses of the tree-type distribution system S.

As shown in Fig. 1, this tree-type distribution system S is a Peer-to-Peer (P2P) type network system that comprises: a broadcasting apparatus 1 as an example of the distribution apparatus that distributes content data (also called stream data) as distribution information, and various message data as distribution information that includes various kinds of messages: and a plurality of node apparatuses (Peers) 2a, 2b, 2c, ... 21 as examples of a plurality of receiving apparatuses that receive the aforementioned content data and message data.

The node apparatuses 2a to 21 of this kind of tree-type distribution system are called the participating node apparatuses of the tree-type distribution system S. Also, in Fig. 1, the node apparatuses 2a to 21 that are participating in the tree-type distribution system S can be removed from the tree-type distribution system S.

As shown in the bottom frame 101 of Fig. 1, the broadcast-station apparatus 1 and the plurality of node apparatuses 2 are physically connected to a network such as the Internet that is constructed with an IX (Internet eXchange) 5, ISP (Internet Service Provider) 6, DSL (Digital Subscriber Line) line provider (apparatus) 7, FTTH (Fiber To The Home) line provider (apparatus) 8, and communication line (for example, telephone line, fiber opticcable, etc.) 9 ; with a unique apparatus ID and IP (Internet Protocol) address assigned to the broadcast-station apparatus 1 and each node apparatus 2. In the bottom frame 101 of Fig. 1, the thickness of the solid lines corresponding to communication lines 9 indicate the bandwidths of the communication lines (for example the data transfer rates).

With the premise that the apparatuses are physically connected as shown in the bottom frame 101 in this way, then as shown in the top frame 100 of Fig. 1, the tree-type distribution system S is formed with a plurality of levels with the broadcast-station apparatus 1 forming the highest level, and a plurality of node apparatuses 2a to 21 forming a plurality of levels, and based on each IP address, an overlay network having a tree shape is created via a plurality of communication paths K1, K2, K3... Also, the content data and message data that is distributed by the broadcast-station apparatus 1 is transferred in order to the lower-level node apparatuses such as 2g from a higher-level node apparatuses such as 2a. In this way, the node apparatuses 2 that participate in the tree-type distribution system S are capable of receiving the distributed or transferred content data, however, when a node apparatus 2 is removed from the tree-type distribution system S, it no longer is capable of receiving that content data.

Here, one communication path is formed by communication lines or the like that run from the broadcast-station apparatus 1 to a node apparatus that is located in the lowest level. For example, the communication path K1 that is shown in the top frame 100 is formed from communication line 4a, node apparatus 2a, communication line 4c, node apparatus 2c, communication line 4g and node apparatus 2g. Also, the communication path K2 shown in the top frame 100 is formed from communication line 4a, node apparatus 2a, communication line 4c, node apparatus 2c, communication line 4h and node apparatus 2h. Also, for example, the communication line 4a is formed from a plurality of communication lines 9 of various bandwidths shown in the bottom frame 101 of Fig. 1.

In the explanation below, when indicating one of the node apparatuses of the node apparatuses 2a, 2b, ..., the node apparatus may be referred to simply as node apparatus 2 for convenience. Also, when indicating one of the communication paths of the communication paths K1, K2, K3...., the communication path may be referred to simply as communication path K.

Moreover, in this embodiment, setting, control and management of the connection state (connection topology) among the apparatuses in the tree-type distribution system S shown in the top frame 100 of Fig. 1 is performed by a system-management-server apparatus 3. For example, the system-management-server apparatus 3 sets the connection state among the apparatuses of the tree-type distribution system S as shown in the top frame 100 of Fig. 1 based on participation requests from each of the node apparatuses 2, after which, based on that connection state, it creates a connection-state table for each node apparatus 2, and sends that table to each of the node apparatuses 2 that requested participation; and the tree-type distribution system S is created by each of the node apparatuses 2 sending a connection request to the broadcast-station apparatus 1 or a higher-level node apparatus 2 according to the connection-state table and making a connection. The connection-state table that is sent to each of the node apparatuses 2 includes at least the broadcast-station apparatus ID (or IP address of the broadcast-station apparatus 1) as the unique ID information for the broadcast-station apparatus 1 that the node apparatus 2 is to connect to, or a node-apparatus ID (or IP address of a node apparatus) as the unique ID information for an higher-level node apparatus 2. Also, the system-management-server apparatus 3 sends a connection-state table to the broadcast-station apparatus 1 that includes the node apparatus IDs (or IP addresses of the node apparatuses 2) of node apparatuses 2 to which the broadcast-station apparatus 1 is to distribute content data or various kinds of message data.

Also, a node apparatus 2 that is no longer capable of receiving content data or the like because a node apparatus 2 located in a higher level was removed from the tree-type distribution system S can send a participation request to the system-management-server apparatus 3 to obtain a new connection-state table, and by performing a connection request to the broadcast-station apparatus 1 or higher-level node apparatus 2 according to that connection-state table, the tree-type distribution system S is re-built.

It is also possible for the broadcast-station apparatus 1 to set, control and manage the connection state among the apparatuses instead of the system-management-server apparatus 3.

### [2. Construction of the Broadcast-Station Apparatus]

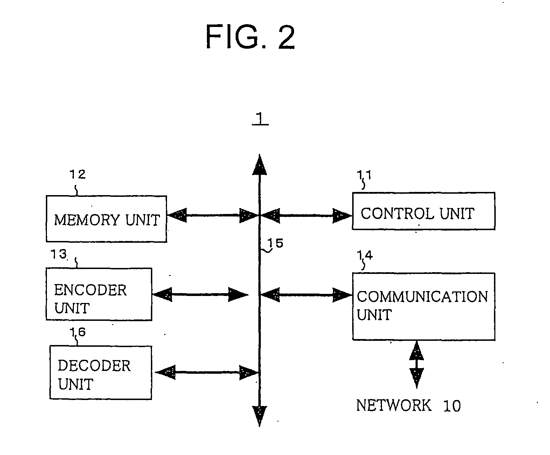

Next, the construction and function of the broadcast-station apparatus 1 will be explained with reference to Fig. 2.

Fig. 2 is a drawing showing the construction of the broadcast-station apparatus 1.

As shown in Fig. 2, the broadcast-station apparatus 1 comprises: a control unit 11 that is constructed from a CPU (Central Processing Unit) having a computational function, RAM (Random Access Memory) for a work area, and ROM (Read Only Memory) that stores various data and programs : a memory unit 12 that is constructed from a HDD (Hard Disc Drive) that stores various data and programs as well as content data and message data ; an encoder unit 13 that encodes (data compression or encryption) video data (video information) and audio data (audio information) that is included in the content data: a decoder unit 16 that decodes (expands or decodes) video data (video information) and audio data (audio information): and a communication unit 14 that controls communication with the node apparatuses 2 via a the network 10; where all of the components are connected together via a bus 15.

Also, by the CPU of the control unit 11 executing a program that is stored in the memory unit 12, the control unit 11 reads the content data that is stored in the memory 12, and encodes the video data and audio data that are included in that content data by way of the encoder unit 13, and distributes the result to the node apparatuses 2 (node apparatuses 2a and 2b in the example shown in the top frame 100 of Fig. 1) via the communication unit 14.

Furthermore, by the CPU in the control unit 11 executing an information-processing program that is stored in the memory unit 12, the control unit 11 functions as a first distribution-information-distribution means, receiving-apparatus-selection means, second distribution-information-distribution means, collected-information-receiving means and message-collection-condition-judgment means. The information-processing program can be downloaded from a specified server on the network 10, for example, or can be recorded on a recording medium such as a CD-ROM and read by way of a recording-medium drive.

The first distribution-information-distribution means, receiving-apparatus-selection means, second distribution-information-distribution means, collected-information-receiving means and message-collection-condition-judgment means that are executed by the control unit 11 will be explained in detail below.

The control unit 11, together with the communication unit 14, functions as a first distribution-information-distribution means, and in this embodiment, distributes inquiry-message data that includes an inquiry message as first distribution information to all the node apparatuses 2 along a plurality of communication paths according to their respective IP addresses. For example, by using an overlay network that is formed into a tree shape, the inquiry-message data is first distributed from the broadcast-station apparatus 1 to the node apparatuses 2a and 2b that are shown in the top frame 100 of Fig. 1, after which, it is transferred in order from the node apparatus 2a and 2b to the lower-level apparatuses 2. Also, in addition to an inquiry message, this inquiry-message data includes a message ID as unique ID information for that inquiry message, and broadcast-station apparatus ID for broadcast-station apparatus 1 (or the IP address for broadcast-station apparatus 1).

Here the inquiry message is a message that may include a survey, questions to a quiz, an inquiry from a person such as a DJ (Disc Jockey) or the like that is a message used by the broadcast-station to ask for replies from some users of the node apparatuses 2.

When this inquiry-message data is received by a node apparatus 2, the node apparatus 2 generates and saves a response message in response to that inquiry message. This response message contains a response to the inquiry message, for example, when the inquiry message contains a survey or questions to a quiz (for example, inquiry to select one choice from among five choices), the response message contains the answers to the survey or questions of the quiz (for example the third choice from among five choices). Also, in the case where the inquiry message contains an inquiry from a DJ or the like (for example, inquiry about desire to have a conversation with the DJ), the response message contains a request related to that inquiry (for example, a request for conversation).

It is also possible for the control unit 11 to be constructed so that it distributes inquiry-message data to al of the node apparatuses according to the IP addresses of the node apparatuses 2.

Also, as a receiving-apparatus-selection means, the control unit 11 selects one of the node apparatuses 2 that is connected to the broadcast-station apparatus 1 to which collection-message data is to be distributed as second distribution information that contains a collection message for collecting the aforementioned response messages that were generated by at least one of the node apparatuses 2. This selection is not particularly limited and can be performed at random by generating a random number, or can be performed by taking into consideration the weight given to the communication path K.

For example, when performed by taking into consideration the weight given to the communication path K, the control unit 11 selects one node apparatus 2 from among the plurality of node apparatuses 2 that are connected to the broadcast-station apparatus 1 according to the probability proportional to the number of all of the node apparatuses 2 that are located in the lower-levels below each node apparatus 2. For example, the number of node apparatuses 2 that are located in the lower levels below the node apparatus 2a shown in the top frame 100 of Fig. 1 is six, or in other words, node apparatuses 2c, 2d, 2g, 2h, 2i and 2j, however, the number of node apparatuses 2 that are located in the lower levels below the node apparatus 2b shown in the same figure is four, or in other words, node apparatuses 2e, 2f, 2k and 2l. Also, selecting one node apparatus 2 by a probability proportional to that number of node apparatuses means, for example, supposing that one node apparatus from among the two node apparatuses 2a and 2b that are connected to the broadcast-station apparatus 1 is selected 10 times, the probability that node apparatus 2a will be selected is 6/10, and the probability that node apparatus 2b will be selected is 4/10. Therefore, even though the number of node apparatuses 2 that are located in lower levels differs for the side of node apparatus 2a and the side of node apparatus 2b, it is possible to maintain fairness that a node apparatus 2 that is located in those lower levels will be selected after that. The number of all of the node apparatuses 2 that are located in lower levels below each node apparatus 2 is obtained by referencing the system-management-server apparatus 3 that manages the connection topology for the over all system S.

In addition to the collected message, the aforementioned collection-message data contains a message ID for the inquiry message that is the object of collection, and a broadcast-station apparatus ID (or IP address of the broadcast-station apparatus 1).

Also, the control unit 11, together with the communication unit 14, functions as a second distribution-information-distribution means, and distributes the aforementioned collection-message data so that it is transferred to the selected node apparatus 2 (for example, node apparatus 2a shown in frame 100 of Fig. 1) in order via one of the communication paths K from among the plurality of communication paths K (for example, communication path K1 shown in frame 100 of Fig. 1).

This collection-message data is transferred in order so that the collection-message data contains a collection message to which response messages are attached by the node apparatuses 2 on one communication path (for example, node apparatuses 2a, 2c and 2g in the case of communication path K1 shown in frame 100 of Fig. 1).

Collection-message data is sent (returned) from one node apparatus 2 on one communication path K to the broadcast-station apparatus 1 as collected information that contains a collection message to which response messages are attached by all of the node apparatuses 2 of that one communication path K. Which node apparatus 2 the collection-message data is collected from will be explained later.

The control unit11. together with the communication unit 14, functions as a collected-information-receiving means, and receives the aforementioned collection-message data that is sent from the node apparatus 2. In doing so, the broadcast-station apparatus 1 collects response messages, for example responses to a survey, from all of the node apparatuses 2 on one communication path K.

At this time, as a message-collection-judgment means, the control unit 11 may also determine whether or not a specified message-collection connection is satisfied based on the collection-message data. The message-collection condition could be a condition that specifies the number of collected response messages, a condition that specifies the number of valid responses to be included in the response messages, a condition that specifies number of times the collection-message data is to be transferred, etc.

Also, when the control unit 11 has determined that the message-collection condition has not been satisfied, for example, when the number of collected response messages is less than then number of collected responses that is specified by a condition specifying the number of collected response messages, the node apparatus 2 that is connected to the broadcast-station apparatus 1 and that is supposed to distribute the collection-message data is selected again. In other words, since that message-collection condition is not satisfied, the collection-message data is distributed again to a node apparatus 2 (essentially is transferred again). In this case as well, this selection can be performed at random by generating a random number, or can be performed by taking into consideration the weight of the communication path, in the same way as described above.

Furthermore, the control unit 11 may select another node apparatus 2 other than the previously selected node apparatus 2 (this means that the node apparatus is selected during a series of processing in which collection-message data is distributed and re-distributed until the message-collection condition is satisfied). For example, when the node apparatus 2a is previously selected from among the two node apparatuses 2a and 2b that are shown in the top frame 100 of Fig. 1, node apparatus 2b is selected this time. By doing this, it is possible to maintain fairness of selection even more.

Content data and various message data are formed into packets by the control unit 11 for example, and the IP address of the distribution destinations are added to each respective packet and sent from the communication unit 14.

When the broadcast-station apparatus 1 receives a response message that includes a request corresponding to the inquiry message, the user of the broadcast-station apparatus 1 (for example, a DJ) can use a program that uses random numbers to automatically specify an IP address of a node apparatus 2 that was selected from among the node apparatuses 2 that sent a request, and connect directly to that node apparatus 2. In this case, the control unit 11 can decode the encoded video data (video information) and audio data (audio information) that was sent from the selected node apparatus 2 (for example conversation between the user of the selected node apparatus 2 and the DJ) by way of the decoder unit 16, and send it to the node apparatuses (node apparatuses 2a and 2b in the example shown in the top frame 100 of Fig. 1) via the communication path 14.

### [3. Construction of a Node Apparatus]

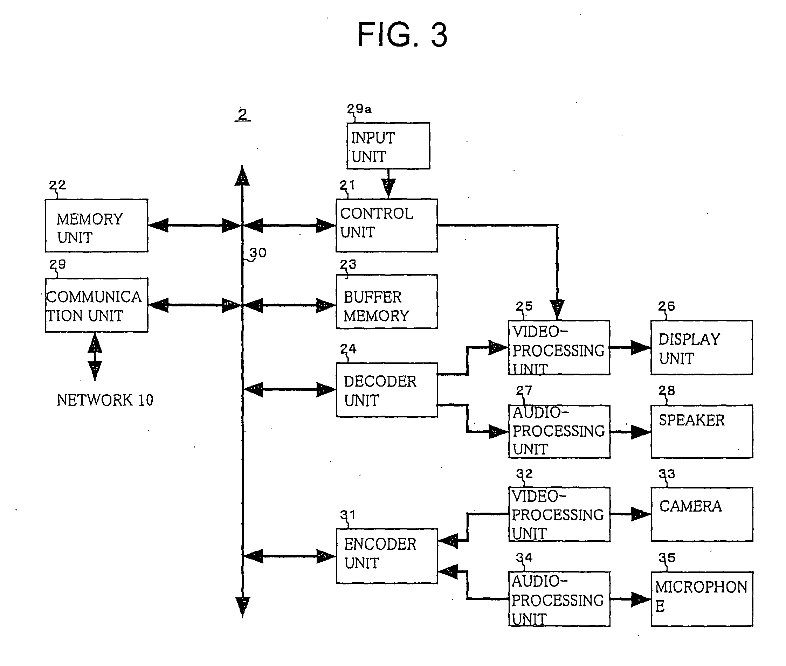

Next, the construction and function of the node apparatuses 2 will be explained with reference to Fig. 3.

Fig. 3 is a drawing showing an example of the construction of a node apparatus 2.

As shown in Fig. 3, each node apparatus 2 comprises: a control unit 21 as a computer that is constructed from a CPU having a computational function, RAM for a working area, and ROM that stores various kinds of data and programs; a buffer memory 23 that temporarily stores received content data; a decoder unit 24 that decodes encoded video data and audio data that is included in content data; a video-processing unit 25 that performs specified image processing on decoded video data and outputs a video signal ; a display unit 26 such as a CRT or liquid-crystal display that displays video based on the video signal that is output from the video-processing unit 25: an audio-processing unit 27 that converts decoded audio data from digital to an analog audio signal (D/A conversion), after which it amplifies and outputs the result; a speaker 28 that outputs the audio signal that is output from the audio-processing unit 27 as sound waves: a camera 33 that is used by the user of the node apparatus 2 when the user of the broadcast-station apparatus 1 (for example, the DJ of a broadcast program) allows the transmission of video data (video information) and audio data (audio information): a video-processing unit 32 that performs A/D conversion (Analog to Digital conversion) when necessary of a video that was captured by the camera 33, or recorded video that was prepared by the user of a node apparatus 2: a microphone that is used by the user of the node apparatus 2: an audio-processing unit 34 that performs A/D conversion (Analog to Digital conversion) when necessary of audio (sound) that is recorded using the microphone 35, or recorded audio (sound) that was prepared by the user of the node apparatus 2: an encoder unit 31 that encodes video data (video information) and audio data (audio information) that was transmitted by the user of the node apparatus 2: a communication unit 29 that performs control of communication with the broadcast-station apparatus 1 or other node apparatus 2 via the network 10: and an input unit 29a that receives an instruction from the user and gives an instruction signal that corresponds to that instruction to the control unit 21 ; where the control unit 21, memory unit 22, buffer memory 23, decoder unit 24, encoder unit 31 and communication unit 29 are all connected together via a bus 30.

Also, by the CPU of the control unit 21 executing a program that is stored in the memory unit 22, the control unit 21 receives content data that was distributed from the broadcast-station apparatus 1, or that was transferred from a node apparatus 2 that is connected in the level above (for example, in the example shown in the top frame 100 of Fig. 1, the node apparatus connected in the level higher than node apparatus 2c is node apparatus 2a) via the communication unit 29, and stores that content data in the buffer memory 23, then reads that content data from the buffer memory 23 and decodes the video data and audio data that is included in that data by way of the decoder unit 24, and outputs the video data to the video-processing unit 25 and the audio data to the audio-processing unit 27.

Moreover, the control unit 21 (except that of the node apparatuses 2g to 2l of the lowest level) transfers the received content data to the node apparatus 2 connected in the level below (for example, in the example shown in the top frame 100 of Fig. 1, the node apparatuses that are connected in the level below node apparatus 2b are node apparatuses 2e and 2f) by way of the communication unit 29. By doing this, the content data is transferred in order all the way to the node apparatuses of the lowest I eve I 2g to 21.

Furthermore, by the CPU of the control unit 21 executing a information-processing program that is stored in the memory unit 22, the control unit 21 functions as a first distribution-information-receiving means, a response-message-generation means, a second distribution-information-receiving means, a response-message-adding means, and lower-level-judgment means, a receiving-apparatus-selection means, a collected-information-transfer means, a collected-information-transmission means, and a message-collection-condition-judgment means. The information-processing program, can be downloaded from a specified server on the network 10, for example, or could be recorded on a recording medium such as a CD-ROM and read by way of a recording-medium drive.

The first distribution-information-receiving means, response-message-generation means, second distribution-information-receiving means, response-message-adding means, and lower-level-judgment means, receiving-apparatus-selection means, collected-information-transfer means, collected-information-transmission means, and message-collection-condition-judgment means will be explained in more detail below.

The control unit 21, together with the communication unit 29, functions as a first distribution-information -receiving means and receives inquiry-message data from the broadcast-station apparatus or a node apparatus 2 that is connected in a higher level, then as a response-message-generation means, generates a response message in response to the inquiry message based on input from the input unit 29a, and correlates this response message with the message ID and broadcast-station ID that are included in the inquiry-message data and stores that response message in the memory unit 22. The inquiry message that is included in the received inquiry-message data is displayed on the display unit 26 by way of the video-processing unit 25 according to control from the control unit 21, for example, and in response to the displayed inquiry message, the user operates the input unit 29a and inputs a response (answer) instruction (for example, the user selects one choice from among five choices of a survey) and a response message is generated that corresponds to that input.

Also, the control unit 21 transfers the aforementioned inquiry-message data to the lower-level node apparatuses that are connected to that node apparatus 2.

Moreover, the control unit 21, together with the communication unit 29, functions as a second distribution-information-receiving means that receives the collection-message data described above from the broadcast-station apparatus 1 or a node apparatus 2 in the level above that it is connected to, and as a response-message-adding means, adds the generated response message that was saved in the memory unit 22, and its own node-apparatus ID to the collected message that is included in the collection-message data.

Also, as a lower-level-judgment means, the control unit 21 determines whether or not another node apparatus 2 is connected in the level below it, and when it is determined that a node apparatus 2 is connected, as a receiving-apparatus-selection means, the control unit 21 selects one node apparatus 2 that is connected in the level below as the node apparatus 2 to which it is to transfer the collection-message data. In this case as in the case of the broadcast-station apparatus 1 described above, this selection may be performed at random by generating a random number, or can be performed by taking into consideration the weight of the communication path K. For example, when selection is performed taking into consideration the weight of the communication path K, the control unit 21 selects one node apparatus 2 with a probability that is proportional to the total number of node apparatuses 2 that are located in the levels below each of the node apparatuses 2 that are connected to that node apparatus 2. The total number of node apparatuses 2 that are located in the levels below each node apparatus 2 is obtained by referencing a system-management-server apparatus 3 that manages the connection topology of the entire system S.

Furthermore, the control unit 21 can select another node apparatus 2 other than a node apparatus 2 that was selected previously.

Also, the control unit 21, together with the communication unit 29, functions as a collected-information-transfer means, and according to an IP address, transfers the aforementioned collection-message data to the selected node apparatus 2. In this way, as was described above, collection-message data that includes a collection message to which response messages from node apparatuses on one communication path K are added is transferred in order.

On the other hand, when the control unit 21 determined that no other node apparatuses are connected in the level below, or in other words, when that node apparatus 2 is located on the lowest level, the control unit 21, together with the communication unit 29, functions as a colleted-information-transmission means, and obtains the IP address from the broadcast-station apparatus ID that is included in the collection-message data (for example, sends the broadcast-station apparatus ID to the system-management server apparatus 3 and obtains the IP address that corresponds to it), and sends the collection-message data to the broadcast-station apparatus 1 according to that IP address. By doing so, as described above, response messages from all of the node apparatus 2 on one communication path K are accumulated at the broadcast-station apparatus 1.

Moreover, as a message-collection-condition-judgment means, the control unit 21 can also determine whether or not a specified message-collection condition is satisfied. The message-collection condition can be the same as that for the broadcast-station apparatus 1, for example, it could be a condition that specifies the number of collected response messages, a condition that specifies the number of valid responses included in the response messages, a condition that specifies the number of times the collection-message data is transferred, etc. This kind of message-collection condition can be included together with the collection message in the collection-message data and distributed.

Also, when the control unit 21 determines that the message-collection condition has been satisfied, for example, when the number of times the collection-message data has been transferred has reached the specified number of times specified by the condition specifying the number of times the collection-message data is to be transferred, even though that node apparatus 2 is not in the lowest level, it sends the collection-message data to the broadcast-station apparatus 1. However, when the control unit 21 determines that the message-collection condition has not been satisfied, it selects one node apparatus 2 that is connected in the level below as the node apparatus 2 to which the collection-message data is to be transferred.

The control unit puts the content data and various kinds of message data into packets, and adds the IP address of the distribution destination to the header of each packet and sends the packets by way of the communication unit 29.

Also, it is not necessary for a node apparatus 2 to comprise all or some of the components such as the decoder unit 24, video-processing unit 25, display unit 26, audio-processing unit 27 and speaker 28, and, for example, construction is possible in which these components are comprised in another apparatus (television receiver, personal computer, etc.) that is connected to that node apparatus via a coaxial cable or LAN (Loca Area Network) cable.

### [4. Operation of a Tree-type Distribution]

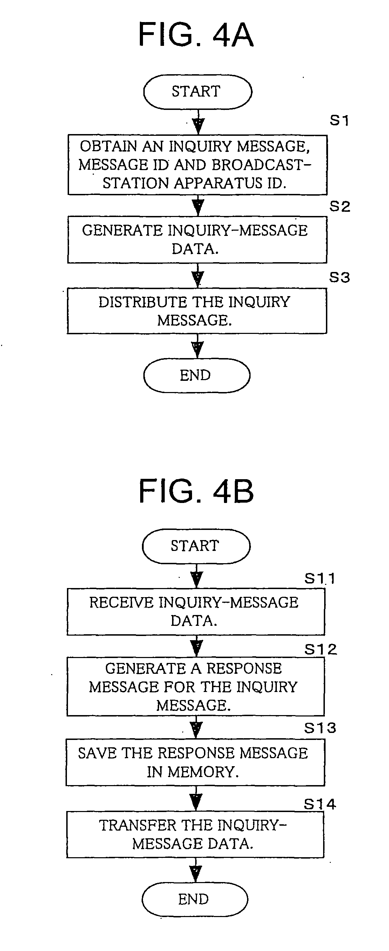

Next the operation of a tree-type distribution system S will be explained with reference to Fig. 4 to Fig. 7.

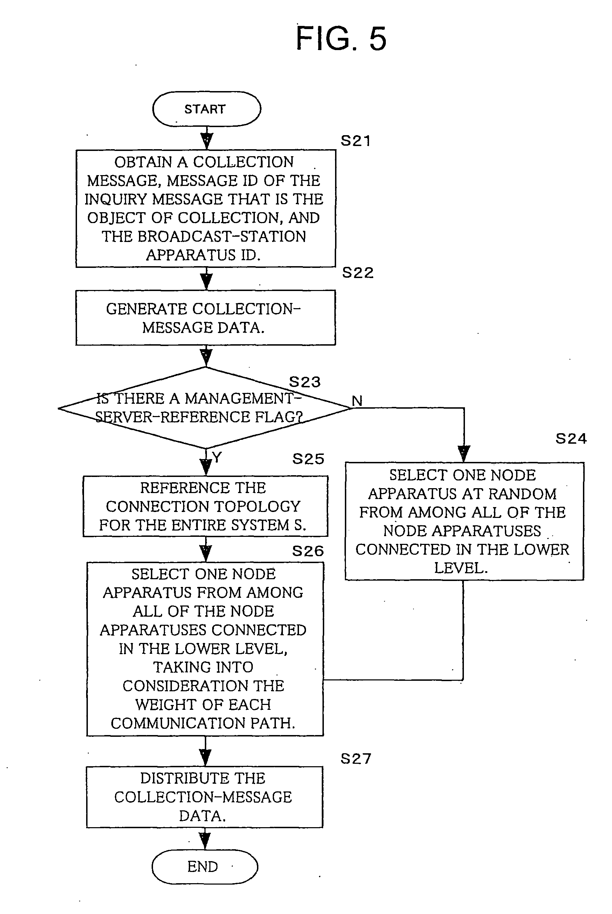

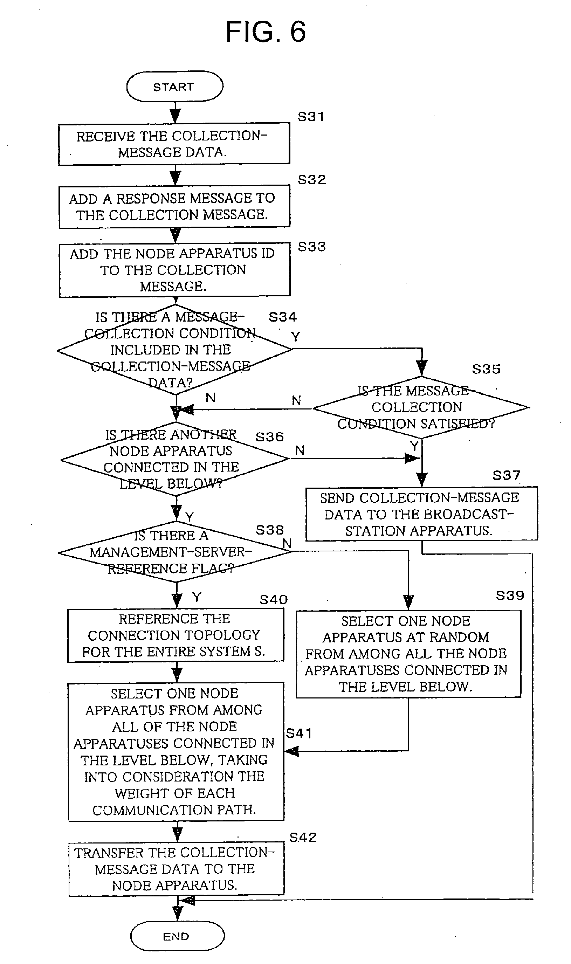

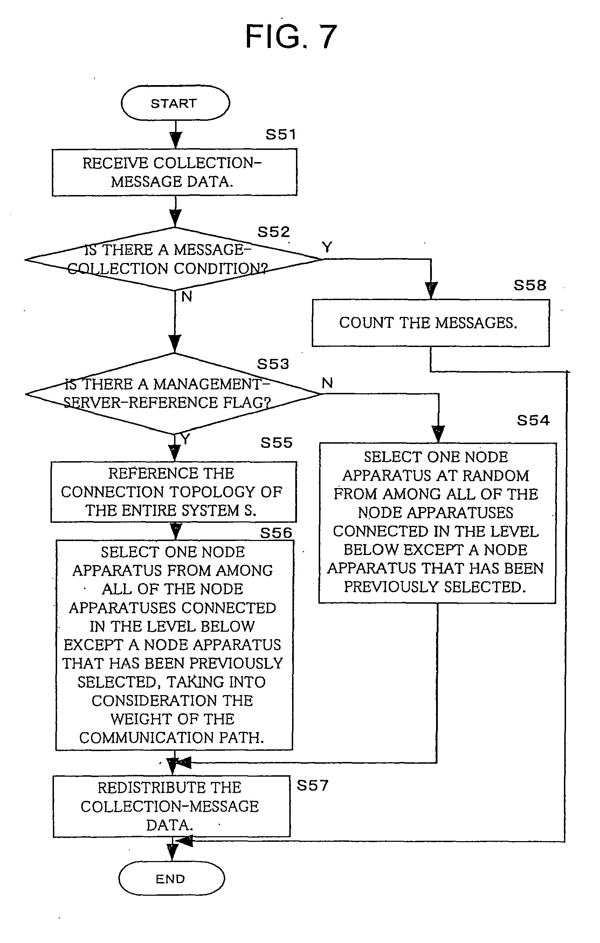

Fig. 4A is a flowchart showing the inquiry-message-data-distribution process that is performed by the control unit 11 of the broadcast-station apparatus 1, and Fig. 45B is a flowchart showing the inquiry-message-data-receiving process that is performed by the control unit 21 of a node apparatus 2. Also, Fig. 5 is a flowchart showing the collection-message-data-distribution process that is performed by the control unit 11 of the broadcast-station apparatus 1, and Fig. 6 is a flowchart showing the collection-message-receiving process that is performed by the control unit 11 of the broadcast-station apparatus 1. Moreover, Fig. 7 is a flowchart showing the collection-message-data-receiving-and-transfer process that is performed by the control unit 21 of a node apparatus 2.

Fig. 4 to Fig. 7 show an example of the processing executed by the means of the control unit 11 of the broadcast-station apparatus 1 or control unit 21 of a node apparatus 2.

### (Distributing and Receiving Inquiry-message Data)

First, the operation when inquiry-message data is distributed from a broadcast-station apparatus 1 and received by node apparatuses will be explained with reference to Fig. 4.

First, when the process shown in Fig. 4A is started by the broadcast-station apparatus 1, the inquiry message, which contains a preset survey, questions of a quiz, inquiry from someone such as a DJ, or the like, the message ID for that message and the broadcast-station ID are obtained (for example, obtained from the memory unit 12 and stored in a specified area of RAM) (step S1). Next, inquiry-message data that includes the obtained inquiry message, message ID and broadcast-station apparatus ID is generated (step S2).

Next, the generated inquiry message data is distributed (sent) via the network 10 according to IP addresses to all of the connected node apparatuses 2 that are in levels below the broadcast-station apparatus 1 (for example, in the example shown in the top frame 100 of Fig. 1, node apparatuses 2a and 2b) (step S3), after which processing ends.

Next, in the node apparatuses 2, the process shown in Fig. 4B is started, and the inquiry-message data that was distributed from the broadcast-station apparatus 1 or transferred from a node apparatus 2 is received (step S11).

Next, a response message that corresponds to the inquiry message included in that inquiry-message data is generated according to instruction input that was input from the user via the input unit 29a (step S12). As described above, the response message includes an answer to the inquiry message, however, it is not always limited to a valid answer, and an invalid answer may also be included. For example, when one choice from among five choices is to be selected in answer to questions on a survey or quiz, the response message may include the valid answer, which was the third choice selected from five choices, as the answer to the question of that survey or quiz, as well as may include an invalid answer in which none of the choices was selected. In the case of this kind of invalid answer, the response message itself need not be generated.

Next, the generated response message is correlated with the message ID and broadcast-station apparatus ID that are included in the inquiry message, and stored in the memory unit 22 (step S13).

Next, the inquiry-message data is transferred via the network 10 according to IP addresses to all of the connected node apparatuses 2 (node apparatuses 2c and 2d in the example shown in the top frame 100 of Fig. 1) in the level below that node apparatus (node apparatus 2a in the example shown in the top frame 100 of Fig. 1) (step S14), and then processing ends.

The node apparatuses 2 that received the inquiry-message data that was transferred in this way, similarly executes the processing shown in Fig. 4B, and that inquiry-message data is transferred in order toward the node apparatuses 2 in the lowest level, until finally it has reached all of the node apparatuses 2 that are participating in the tree-type communication system S.

### (Distributing and Receiving Collection-Message Data)

Next, the operation when collection-message data is distributed from the broadcast-station apparatus 1 and received by each node apparatus 2 will be explained with reference to Fig. 5 and Fig. 6.

First, in the broadcast-station apparatus 1 when the process-shown in Fig. 5 is started, a preset collection message, a message ID for the inquiry message that is the object of collection, the broadcast-station apparatus 1 ID, and when necessary a message-collection condition are obtained (step S21). Then, collection-message data that includes the obtained collection message, message ID and broadcast-station apparatus ID is generated (step S22).

Next, it is determined whether or not there is a management-server-reference flag (step S23), and when there is no flag (step S23: N), the process advances to step S24. However, when there is a flag (step S23: Y), the process advances to step S25. Setting a management-server-reference flag is performed by the operator of the broadcast-station apparatus 1, for example.

In step S24, a random number is generated and one node apparatus 2 is selected at random from among all of the connected node apparatuses (node apparatus 2a and 2b in the example shown in the top frame 100 of Fig. 1) in the level below the broadcast-station apparatus 1.

On the other hand, in step S25, the broadcast-station apparatus connects to the system-management-server apparatus 3 and references the connection topology for the overall system S, and for example, obtains the number of all of the node apparatus 2 that are located in the level below each of the node apparatuses 2 that are connected to the broadcast-station apparatus 1.

Next, taking into consideration the weighting of each of the communication paths, one of the node apparatuses 2 is selected from all of the connected node apparatuses 2 in the level below the broadcast-station apparatus 1, for example, as described above, one node apparatus 2 is selected with a probability that is proportional to the total number of node apparatuses that are located in the levels below each obtained node apparatus 2 (step S26).

Also, the generated collection-message data is distributed (sent) to the selected node apparatus 2 via the network 10 according to the IP address (step S27).

Next, in the node apparatus 2, the process shown in Fig. 6 is started, and the collection-message data that was distributed or transferred from the broadcast-station apparatus 1 or node apparatus 2 in the level above is received (step S31).

Next, a response message (response message that was stored in memory in step S13) that corresponds to the message ID that is included in that collection-message data is obtained (read) from the memory unit 22, and that response message is added to the collection message that is included in the collection-message data (step S32).

Next, the node-apparatus ID of that node apparatus 2 is attached to that collection message (step S33).

Next, it is determined whether or not a message-collection condition is included in that collection-message data (step S34), when a message-collection condition is included (step S34: Y), processing advances to step S35. On the other hand, when a message-collection condition is not included (step S34: N), processing advances to step S36.

In step S35, based on that collection-message data, it is determined whether or not the message-collection condition has been satisfied, and when the condition has not been satisfied (step S35 : N), processing advances to step S36, and when the condition has been satisfied, processing advances to step S37. For example, in the case where that message-collection condition is a condition that specifies the number of times the collection-message data is transferred, information is added that indicates the current number of times transferred (the number of times the collection-message data has been transferred up to that node apparatus 2) , and when the current number of times transferred has reached the number of times specified by that condition, processing advances to step S37. Also, for example, in the case where that message-collection condition is a condition that specifies the number of collected response messages, information that indicates the current number of response messages collected (number of response messages collected up to that node apparatus 2) is attached to this condition, and when the current number of responses collected has reached the number of collected responses specified by this condition, processing advances to step S37. It is also possible to determine whether or not a condition that specifies the number of valid answers included in the response message has been satisfied.

In step S36, it is determined whether or not other node apparatuses 2 are connected in the level below, and when no node apparatus 2 is connected (step S36: N), processing advances to step S37, and when a node apparatus 2 is connected (step S36: Y), processing advances to step S38.

In step S37, the IP address is obtained from the broadcast-station apparatus ID that is included in the collection-message data, and according to that IP address, collection-message data that includes a collection message to which the response message or the like is attached is sent to the broadcast-station apparatus 1 via the network 10.

In step S38, it is determined whether or not there is a management-server-reference flag, and when there is no flag (step S38: N), processing advances to step S39. However, when there is a flag (step S38: Y), processing advances to step S40. The management-server-reference flag can be such that it is included in the collection-message data that is set on the side of the broadcast-station apparatus 1 and distributed, or it could be set by a user of a node apparatus 2.

In step S39, a random number is generated and one node apparatus 2 is selected at random from among all the connected node apparatuses 2 (node apparatuses 2c and 2d in the example shown in the top frame 100 of Fig. 1) in the level below that node apparatus 2 (node apparatus 2a in the example shown in the top frame 100 of Fig. 1).

On the other hand, in step S40, that node apparatus 2 connects to the system-management-server apparatus 3 and references the connection topology of the entire system S, and for example, obtains the total number of node apparatuses 2 that are in the level below each of the node apparatuses 2 that are connected to that node apparatus 2.

Next, taking into consideration the weight of each communication path, one node apparatus 2 is selected from among all of the connected node apparatuses in the level below that node apparatus 2, and for example, as was described above, one node apparatus 2 is selected with a probability proportional to the total number of node apparatuses 2 located in the I eve I below each obtained node apparatus 2 (step S41).

Also, the collection-message data is transferred via the network 10 to the selected node apparatus 2 according to the IP address (step S42), and processing ends.

The process shown in Fig. 6 is similarly executed for the node apparatus 2 that received the collection-message data that was transferred as described above, and that collection-message data is transferred in order toward the node apparatus 2 that is located on the lowest level of one communication path K until the message-collection condition is met in step S35, or until it is determined that there are no more other node apparatuses connected in a lower level in step S36.

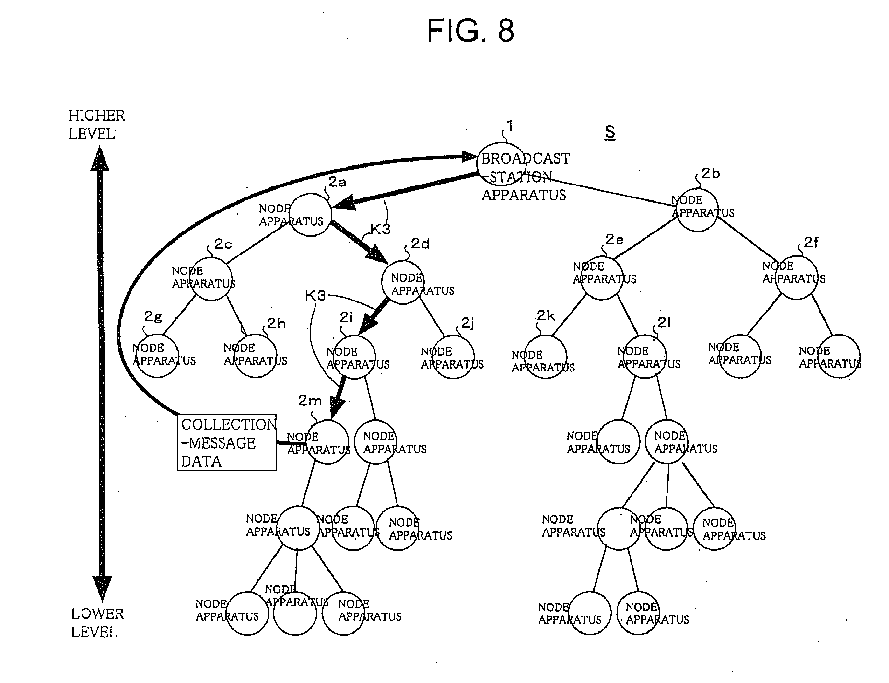

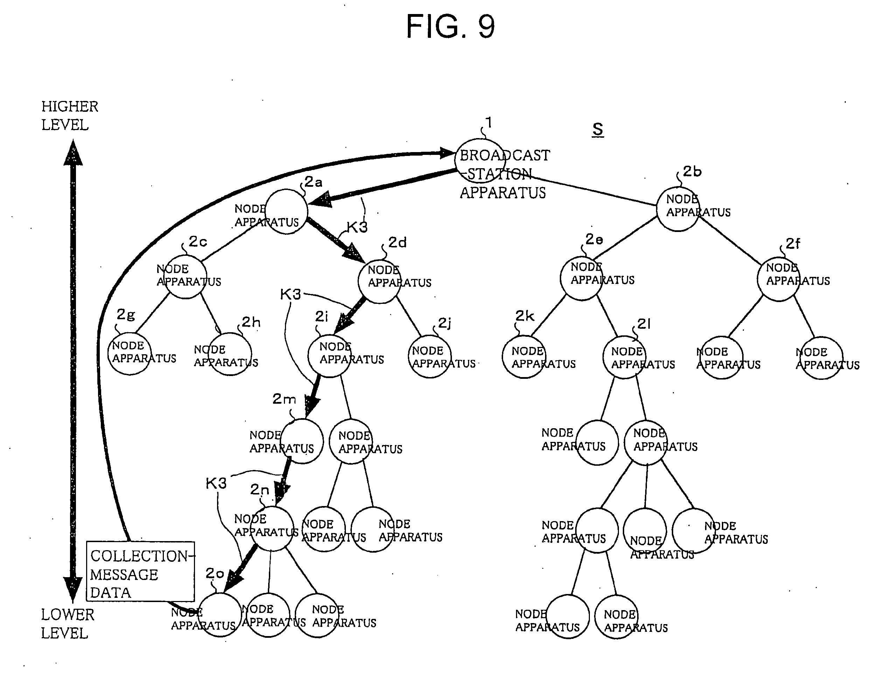

Fig. 8 is a drawing showing an example of the transmission of the collection-message data when the a message-collection condition is satisfied along the communication path K3, and Fig. 9 is a drawing showing an example of transmission of the collection-message data when a message-collection condition is not satisfied along the communication path K3. In the example shown in Fig. 8, the collection-message data is transferred in order to the node apparatuses 2a, 2d and 2i on the communication path K3, and at node apparatus 2m, the message-collection condition, for example, a condition that specifies the number of times the collection-message data is to be transferred (4 times in the example) is satisfied, so that collection-message data is sent from that node apparatus 2m to the broadcast-station apparatus 1. On the other hand, in the example shown in Fig. 9, the collection-message data is transferred in order to the node apparatuses 2a, 2d, 2i, 2m and 2n on the communication path K3, and since the message-collection condition is not satisfied at any of the node apparatuses along the way, that collection-message data is sent from the node apparatus located on the lowest level to the broadcast-station apparatus 1.

In the case where the condition that specifies the number of times the collection-message data is to be transferred is included in that collection-message data, the current number of times it has been transferred that is attached to this condition increases by an increment of ' 1' each time the collection -message data is transferred. Also in the case where the condition that specifies the number of response messages to be collected is included in that collection-message data, the current number of response messages that is attached to that condition is increased by an increment of '1' each time a response message is collected (added to the collected message).

### (Receiving and Redistributing Collection-message Data)

Next, the operation when the collection-message data is sent from a node apparatus 2 and received by the broadcast-station apparatus 1, and then the collection-message data is redistributed from the broadcast-station apparatus 1 will be explained with reference to Fig. 7.

First, in the broadcast-station apparatus 1, the process shown in Fig. 7 is started, and the collection-message data that was sent from the node apparatus 2 is received (step S51).

Next, based on that collection-message data, it is determined whether or not the message-collection condition is satisfied, and when the condition is not satisfied (step S52: N), processing advances to step S53, and when the condition is satisfied (step S52 : Y), processing advances to step S58.

For example, in the case where the message-collection condition is a condition that specifies the number of valid answers included in the response message, the number of answers included in the collected response messages (response messages that are added to the collection message) that are valid answers are counted, and when the counted number of valid answers is equal to the number of valid answers specified by the condition or greater, processing advances to step S58. Also, for example, in the case where the message-collection condition is a condition that specifies the number of response messages to be collected, when the number of collected response messages is equal to the number of response messages to be collected that was specified by the condition or greater, processing advances to step S58. Moreover, in the case where the message-collection condition is a condition that specifies the number of times the collection-message data is to be transferred, when the actual number of times that the collection-message data is transferred reaches the number of times that is specified by the condition, processing advances to step S58.

In step S53, it is determined whether or not there is a management-server-reference flag, and when there is no flag (step S53 : N), processing advances to step S54. On the other hand, when there is a flag (step S53: Y), processing advances to step S55. Setting a management-server-reference flag can be performed by the operator on the side of the broadcast-station apparatus 1.

In step S54, a random number is generated, and one node apparatus 2 is selected at random from among all of the connected node apparatuses 2 in the level below the broadcast-station apparatus 1 except for a node apparatus 2 that was previously selected (however, in the case where all of the node apparatuses 2 have been selected already without advancing to step S58, that selected node apparatus 2 is also included, and the same is true below). It is also possible to increase the probability that a node apparatus 2 that has not been selected in the past will be selected.

On the other hand, in step S55, the broadcast-station apparatus 1 connects to the system-management-server apparatus 3 and references the connection topology for the entire system S, for example, the total number of node apparatuses 2 that are located in the level below each of the node apparatuses 2 that are connected to the broadcast-station apparatus is obtained.

Next, taking into consideration the weight of each communication path K, one node apparatus is selected from among all of the connected node apparatuses in the level below the broadcast-station apparatus 1 except for a node apparatus 2 that has previously been selected, for example, as described above, one node apparatus 2 is selected, except for a previously selected node apparatus, at probability that is proportional to the total number of node apparatuses 2 that are in levels below each of the obtained node apparatuses 2 (step S56).

The collection-message data is redistributed to the selected node apparatus 2 via the network 10 according to the IP address (for example, the collection-message data that was received in step S51 is distributed) (step S57), and processing ends.

In this way, the process shown in Fig. 6 is similarly executed by that node apparatus 2. In the case of redistributing collection-message data, in step S39 shown in Fig. 6, a random number is generated, and one node apparatus 2 is selected at random from among all of the connected node apparatuses in the level below that node apparatus 2 except for a previously selected node apparatus, however, in step S41 as well, taking into consideration the weight of each communication path K, one node apparatus 2 is selected from among all of the connected node apparatuses 2 in the level below that node apparatus 2. It is also possible to increase the probability that a node apparatus 2 that has never been selected in the past will be selected.

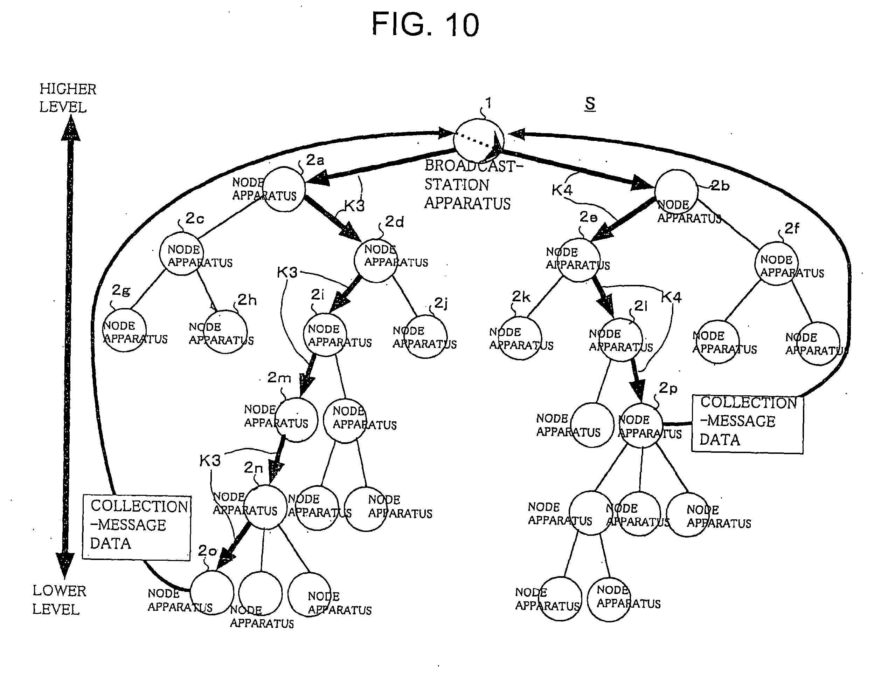

Fig. 10 is a drawing showing an example of redistribution of the collection-message data in order to satisfy the message-collection condition. In the example shown in Fig. 10, collection-message data is transferred in order to the node apparatuses 2a, 2d, 2i, 2m and 2n on the communication path K3, however, since the message-collection condition is not satisfied at a node apparatus 2 along the way, that collection-message data is sent from the node apparatus 2 in the lowest level to the broadcast-station apparatus 1, after which that collection-message data is redistributed (retransferred) in order to the node apparatuses 2b, 2e, and 2l on a different communication path K4, and when the message-collection condition is satisfied at the node apparatus 2p, that collection-message data is sent from that node apparatus 2 to the broadcast-station apparatus 1.

Also, in step S58, specified processing, such as counting, is performed based on the collected response message. For example, in the case where answers to a survey are included in the response message, the answers to that survey are counted, and a certain response message is selected at random or arbitrarily from the response messages, then the node apparatus ID corresponding to that message is determined as the node apparatus ID of the winner of a prize. Also, for example, when an answer to a quiz is included in the response message, the answers that are the correct answer to the quiz are counted, and a certain response message is selected at random or arbitrarily from the response messages that contain the correct answer, then a node apparatus ID corresponding to that message is determined as the node apparatus of the person with the correct answer to the quiz. Moreover, in the case where an answer requesting conversation when a DJ is included in the response message for example, a certain response message is selected at random or arbitrarily from among response messages, then a node apparatus ID corresponding to that message is determined as the node apparatus lD of a user selected for conversation with the DJ. Also, the broadcast-station apparatus 1 connects to the node apparatus 2 corresponding to the determined node apparatus ID, and sends information indicating that the user is the winner or person with the correct answer, or initiates conversation between the DJ and user.

As described above, with this embodiment, collection-message data in which a collection message is included for collecting response messages corresponding to an inquiry message is distributed from the broadcast-station apparatus 1 in order via one communication path K from among a plurality of communication paths K, and collection-message data in which a collection message to which response messages are added by all of the node apparatuses 2 on that communication path K is sent (returned) from one node apparatus 2 on the communication path K over which that collection-message data is transferred in order to the broadcast-station apparatus 1, so it is possible to collect response messages more efficiently, and it is possible to reduce overall I communication traffic in the up direction of a tree-type distribution system.

Also, the communication path K over which the collection -message data is transferred is determined by taking into consideration the weight of that communication path K (for example, at a probability that is proportional to the total number of node apparatuses 2 in the level below the node apparatus 2 to be selected), so it is possible to maintain fairness in selecting the communication path K.

Furthermore, the collection-message data is redistributed (retransferred) from the broadcast-station apparatus 1 until a specified message-collection condition is satisfied, so it is possible to reliably collect the desired response messages.

### The 2nd embodiment

The 2nd embodiment of the invention will be explained below based on the drawings. The embodiment explained below is an embodiment in which the present invention is applied to a computer-network system.

### [Construction of a Tree-type Network System]

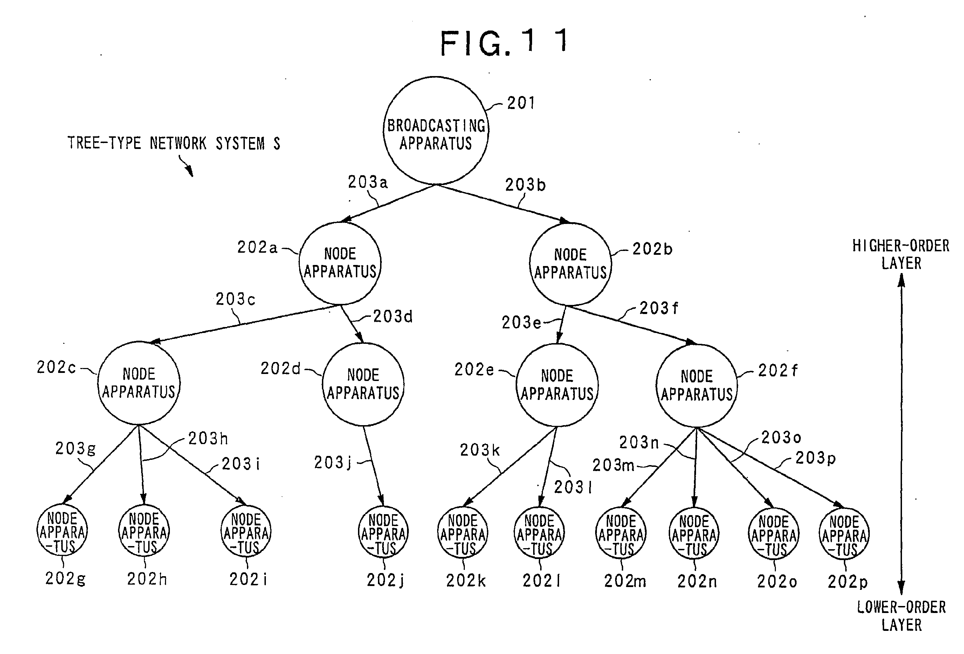

First, Fig. 11 will be used to explain the construction of the tree-type network system of the preferred embodiment.

Fig. 11 is a drawing explaining an example of the connected state of each of the apparatuses in the tree-type network system of the 2nd embodiment. The example shown in Fig. 11 shows an electrically connected state between each of the apparatuses in the tree-type network system S (for example, the connection relationship such as between which apparatuses communication is established).

As shown in Fig. 11, this tree-type network system S is a Peer-to-Peer (P2P) type network system that comprises a broadcasting apparatus 201 as an example of an inquiring apparatus that transmits (distributes) request-reception-begin data Rb as inquiry information, and a plurality of node apparatuses (peers) 202a, 202b, 202c, ..., 202p as an example of a plurality of processing apparatuses that receive the aforementioned request-reception-begin data Rb.

As shown in Fig. 11, in the tree-type network system S there is a plurality of layers with a broadcasting apparatus 201 being the highest layer, and a plurality of node apparatuses 202a to 202p, that are connected in a tree shape via a plurality of communication paths 203a, 203b, 203c, ..., 203p according to the respective IP addresses.

Also, the various data that is distributed by the broadcasting apparatus 201 is transferred in order from the higher-order node apparatuses such as 202a and 202b to the lower-order node apparatuses such as 202g to 202p. In the explanation be low, for convenience when indicating any one of the node apparatuses 202a to 202p, the node apparatus may be simply referred to as node apparatus 202.

The broadcasting apparatus 201 and plurality of node apparatuses 202a to 202p are physically connected to a network such as the Internet that comprises apparatuses that are located at providers such as IX (Internet Exchange), I SP (Internet Service Provider), DSL (Digital Subscriber Line), apparatuses that are located at FTTH (Fiber to the House) line providers, and communication lines such as telephone lines, optical cable or the like, and the broadcasting apparatus 201 and each of the node apparatuses 202a to 202p are assigned with its own unique apparatus ID and IP (Internet Protocol) address.

### [Construction and Function of the Broadcasting Apparatus]

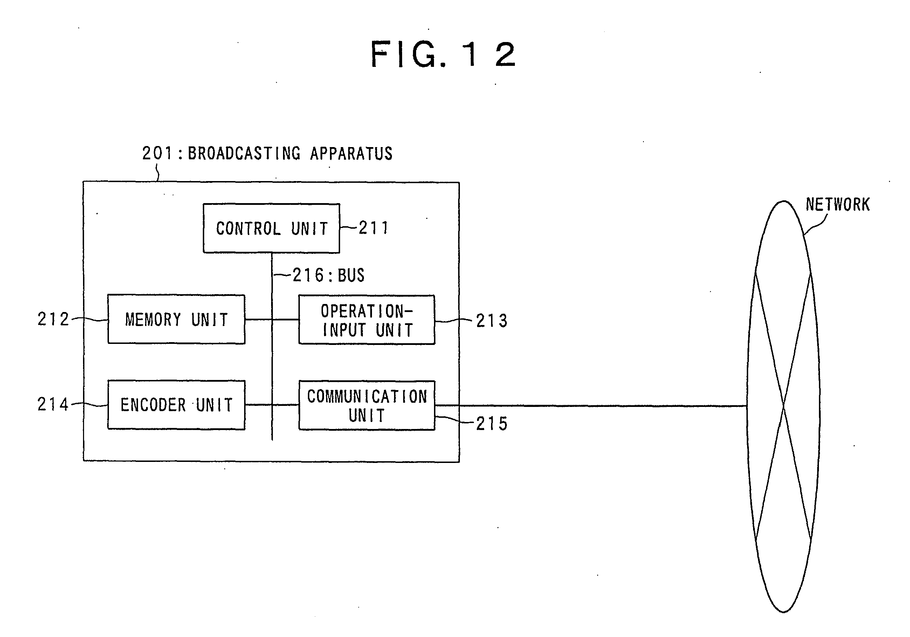

Next, Fig. 12 will be used to explain the construction and function of the broadcasting apparatus 201.

Fig. 12 is a drawing explaining the construction of the broadcasting apparatus 201.

As shown in Fig. 12, the broadcasting apparatus 201 comprises: a control unit 211 of a computer that comprises a CPU (Central Processing Unit) that has a computational function, RAM (Random-Access Memory) for work, and ROM (Read-Only Memory) for storing various data and programs: a memory unit 212 that comprises a HDD (Hard Disc Drive) or the like that stores various data, tables and programs: an operation-input unit 213 for giving instruction to send request-reception data : an encoder unit 214 that encodes (data compression, encoding, etc. ) video data (video information) and audio data (audio information) that are included in the request-reception data; and a communication unit 215 for performing communication control of communication over the network with node apparatuses 202: where each of these components is connected to each other via a bus 216. Also, by executing programs that are stored in ROM or the like, the control unit 211 functions as inquiry-information-transmission means and reply-result-information-receiving means of the present invention.

The request-reception data is either request-reception-begin data Rb or request-reception-end data Re, and is created, for example, by an operator such as a disc jockey, who operates the broadcasting apparatus 201 by operating the operation-input unit 213. More specifically, the operator creates request-reception-begin data Rb such as 'Viewers (or listeners) with a request, please press the request button' , as video data or as multimedia data that also includes audio data, and after attaching an ID code that indicates the beginning of receiving request input, saves the data in the memory unit 212. Also, the operator creates request-reception-end data Re such as 'Receiving requests has ended. Thank you!' as video data or audio data, and after attaching an ID code that indicates the end of receiving request input, saves the data in the memory unit 212.

The method for attaching the aforementioned ID code can be any method as long as the ID code can be identified by a node apparatus; for example, in the case of performing encoding using MPEG (Moving Picture Experts Group) format, the lD code can be entered in the user data portion of the sequence layer.

Also, when the operator operates the operation-input unit 213 and gives an instruction to send either request-reception-begin data Rb or request-reception-end data Re, the CPU in the control unit 211 executes a program that is stored in the memory unit 212, and in doing so, the control unit 211 reads the request-reception-begin data Rb or request-reception-end data Re that is stored in the memory unit 212, then has the encoder unit 214 encode the video data and/or audio data that is included in that data and transmits that data via the communication unit 215 to node apparatuses 202 (node apparatuses 202a and 202b in the example shown in Fig. 11). The node apparatuses 202 determine whether the data is request-reception-begin data Rb or request-reception-end data Re according to the ID data that is attached to that data.

Also, the communication unit 215 has various communication functions such as packet processing, UDP processing, data-link processing, physical-layer processing and the like, and after the request-reception data has been put into packets and the IP address of the node apparatus 202 that is the transmission destination has been attached to each packet header, it is sent from the communication unit 215.

The IP addresses of the node apparatuses 202 that are the transmission destinations (in the example of the tree-type network system S shown in Fig. 11, these are the IP addresses of node apparatuses 202a and 202b that are connected in the lower-order layer directly below) are such that they are acquired according to control from the control unit 211 by referencing a connection-state table that is stored in the memory unit 212.

The processing for sending (transferring) the request-reception data will be described in more detail later.

Moreover, the control unit 211 functions together with the communication unit 215 as a reply-result-information-receiving means that receives reply-result information Ans from the node apparatuses (node apparatuses 202a and 202b in the example shown in Fig. 11) that are connected in the lower-order layer directly below.

This reply-result information Ans includes select-node information X, and total-number information N, which indicates the select-node information X from among that select-node information X that was selected, as an example of the reply information in this invention. Here, the select-node information X is information that indicates one of the node apparatuses that was selected from among the node apparatuses downstream of the node apparatuses 202 and the node apparatuses 202 themselves that are connected in the lower-order layer directly below, and it includes ID-number information that was given to each of the node apparatuses 202 for identifying the apparatuses.

When the communication unit 215 receives reply-result information Ans from each of the respective node apparatuses 202 that are connected in the lower-order layer directly below, it selects according to control from the control unit 211 one of the items of select-node information X from among each item of select-node information X that is included in the received reply-result information Ans. When doing this, it selects one item of select-node information X based on the respective total-number information N that is included in the received replay-result information Ans.

In other words, in the example shown in Fig. 11, the broadcasting apparatus 201 receives the reply-result information Ans from each of the node apparatuses 202a and 202b that are connected in the lower-order layer directly below, and the reply-result information Ans that is sent from node apparatus 202a includes in it, select-node information X, which indicates the node apparatus that was selected from among the node apparatus 202a itself and the node apparatuses 202c, 202d, 202g, 202h, 202i and 202j downstream of node apparatus 202a, and total-number information N (N=6).

Also, the reply-result information Ans that is sent from node apparatus 202b includes in it, select-node information X, which indicates the node apparatus that was selected from among the node apparatus 202b itself and the node apparatuses 202e, 202f, 202k, 2021, 202m, 202n, 202o and 202p downstream of node apparatus 202b, and total-number information N (N=9).

Therefore, the broadcasting apparatus 201 selects one item of select-node information X from among the select-node information X that is included in the reply-result information Ans that is sent from node apparatus 202a, the select-node information X that is included in the reply-result information Ans that is sent from node apparatus 202b, based on the total-number information N that is included in the reply-result information Ans from both.

With this kind of construction, when selecting one item of select-node information X from among the sent select-node information X that was included in the reply-result information Ans from the node apparatuses 202a and 202b, which are node apparatuses that are connected in the lower-order layer directly below, it is possible to take into consideration the total-number information N of the node apparatuses 202 that are connected downstream of the node apparatuses 202a and 202b when making the selection, so it is possible for the select-node information X that is generated by all of the node apparatuses 202 to be selected equally. The detailed method of the process for selecting the select-node information X is the same as the method of the reply-information-selection process by the node apparatuses 202, so it will be described layer when explaining the reply-information-selection process by the node apparatuses 202.

### [Construction and Function of a Node Apparatus]

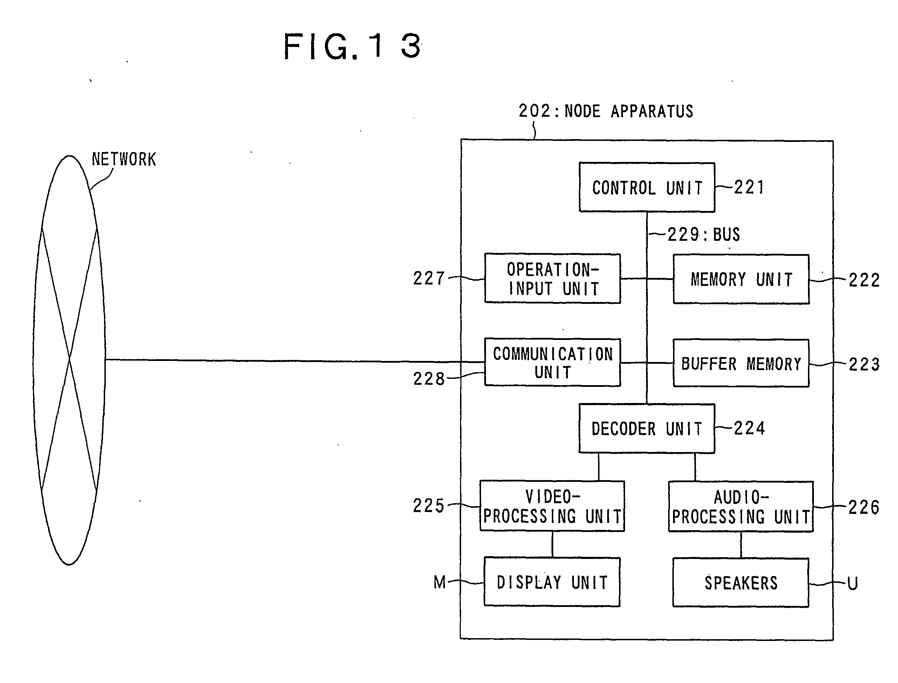

Next, Fig. 13 will be used to explain the construction and function of a node apparatus 202.

Fig. 13 is a drawing explaining an example of the construction of a node apparatus 202.

As shown in Fig. 13, each node apparatus 202 comprises: a control unit 221 as a computer that controls each of the components of the node apparatus 202; a memory unit 222 that comprises a magnetic disc or the like that stores various data, tables and programs: a buffer memory 223 that temporarily stores received request-reception data ; a decoder unit 224 that decodes encoded video data and audio data that is included in the request-reception data: a video-processing unit 225 that performs specified graphic processing of the decoded video data and outputs that data as a video signal; a display unit M such as a CRT, liquid-crystal display or the like that displays video images based on the video signal that is output from the video-processing unit 225; an audio-processing unit 226 that converts (D/A conversion) the decoded digital audio data to an analog audio signal, after which it amplifies the signal by way of an amplifier and outputs the result ; an operation-input unit 227 that is operated by a user for making requests ; and a communication unit 228 that performs communication control over a network between the node apparatus 202 and a broadcasting apparatus 201 or another node apparatus 202; and is such that the control unit 221, memory unit 222, buffer memory 223, decoder unit 224, operation-input unit 227 and communication unit 228 are connected to each other via a bus 219.

The control unit 221 comprises a CPU (Central Processing Unit) (not shown in the figure), working RAM (Random Access Memory), ROM (Read Only Memory) that stores various contro I programs including processing programs, and various data, and a oscillation circuit, and based on operation signals s from the operation unit (not shown in the figure), generates control information for controlling each of the components that execute the operation corresponding to the operation information included in the operation signal, and outputs that control information via the bus 219 to the appropriate components to perform overall control of the operation of those components. Also, by executing programs that are stored in ROM or the like, the control unit 221 functions as the inquiry-information-receiving means, inquiry-information-transfer means, reply-result-information-receiving means, reply-information-creation means, reply-results-information-creation means, reply-results-information-reply means, selection means, total-number-information-acquisition means, total-number-information-transmission means, end-information-receiving means, answer-information-input-receiving means, and wait-time-setting means of this invention.

More specifically, when the CPU of the control unit 221 executes a program stored in the memory unit 222 or the like, the control unit 221 functions together with the communication unit 228 as the inquiry-information-receiving means and receives via the communication unit 228 request-reception data that is sent from the broadcasting apparatus 201, or that is transferred from a node apparatus 202 that is connected in the higher-order layer directly above (for example, in Fig. 11, a node apparatus 202 that is connected in the higher-order layer directly above node apparatus 202c is node apparatus 202a), and together with storing that data in the buffer memory 223, reads that request-reception data from the buffer memory 223, then has the decoder unit 224 decode the video data and audio data included in that data and output the video data to the video-processing unit 225 and output the audio data to the audio-processing unit 227.

Furthermore, together with the communication unit 228, the control unit 221 (except in the node apparatuses 202g to 202p of the lowest-order layer) functions as the inquiry-information-transfer means, and transfers via the communication unit 228 request-reception data that was sent from a node apparatus 202 that is connected in the higher-order layer directly above to a node apparatus 202 that is connected in the lower-order layer directly below.

In other words, in the example shown in Fig. 11, the node apparatuses 202 that are connected in the lower-order layer directly below node apparatus 202a are node apparatuses 202c and 202d, so when node apparatus 202a receives request-reception data from the broadcasting apparatus 201, it transfers that request-reception data to node apparatuses 202c and 202d.

Also, the node apparatuses 202 that are connected in the lower-order layer directly below node apparatus 202c are node apparatuses 202g to 202i , so when node apparatus 202c receives request-reception data from node apparatus 202a that is connected in the higher-order layer, it transfers that request-reception data to node apparatuses 202g to 202i.

In this ways, request-reception data that is sent from the broadcasting apparatus 201 is transferred in order to the lowest-order node apparatuses 202g to 202p.

Here, similar to the broadcasting apparatus 201 described above, the control unit 221 references a connection-state table that is stored in the memory unit 222 to determine the transfer destination of the request-reception data. This connection-state table includes at least the IP addresses of that node apparatus 202 and the node apparatuses 202 to which it is connected.

Moreover, together with the control unit 221, the operation-input unit 227 functions as the answer-information-input-receiving means, and it comprises a request button, operation bar, keyboard, and the like, and from the time that the request-reception-begin data Rb that is received by way of the communication unit 228 is reproduced and output by the speaker U or display unit M until the request-reception-end data Re is received, the operation-input unit 227 receives request input from the user as answer information.

Also, the control unit 221 functions as the reply-information-creation means, and based on an input request, creates select-node information X as an example of the reply information in this invention, and temporarily stores that information in the memory unit 222.

Moreover, together with the communication unit 228, the control unit 221 functions as the reply-result-information-receiving means, and receives select-node information X that is sent from each of the node apparatuses 202 that are connected in the lower-order layer directly below as reply-result information Ans. Also, the control unit 221 functions as the wait-time-setting means, and after a timeout time To (described later) has passed, receives the reply-result information Ans that is sent from each of the node apparatuses 202 that are connected in the lower-order layer directly below.

Moreover, the control unit 221 functions as the reply-result-information-creation means, and based on the select-node information X that is sent from each of the node apparatuses 202 that are connected in the lower-order layer directly below as reply-result information Ans, and the select-node information X created by itself, creates new reply-result information Ans.

Furthermore, together with the communication unit 228, the control unit 221 functions as the reply-result-information-reply means, and transfers (sends) the created reply-result information Ans to the node apparatus 202 that is connected in the higher-order layer directly above. Node apparatuses 202a and 202b transfer (send) newly created reply-result information Ans to the broadcasting apparatus 201.

In other words, when a node apparatus 202, except for the node apparatuses 202g to 202p of the lowest-order layer, receives reply-result information Ans by way of the communication unit 228 from the respective node apparatuses 202 that are connected in the lower-order layer directly below, it selects, according to control from the control unit 221, one item of select-node information X from among all of the items of select-node information X that were included in the received reply-result information Ans, and the select-node information X that was created by that node apparatus 202 itself. When doing this, it selects one item of select-node information X based on each item of total-number information N that was included in the received reply-result information Ans.

Also, the control unit 221 creates new reply-result information Ans that includes the selected select-node information X, and total-number information N that indicates how many items of select-node information X that that select-node information was selected from.

The lowest-order node apparatuses 202g to 202p have no reply-result information Ans from downstream node apparatuses, so they create reply-result information Ans in which the select-node information X that was created by the node apparatus 202 itself is selected, and the total-number information N counts only that apparatus itself.

By doing this, in the broadcasting apparatus 201 it is possible to know how many items of select-node information X the items of select-node information X that are included in the reply-result information Ans sent from both node apparatus 202a and node apparatus 202b are selected from, and based on that amount it becomes possible to equally select one of the items of select-node information X. The method for generating reply-result information Ans will be described in detail later.

It is not necessary for the node apparatus 202 to comprise of all or part of the components: decoder unit 224, video-processing unit 225, display unit M, audio-processing unit 226 and speaker U, that were given as components of the node apparatus 202, and construction can be such that another apparatus (for example a television receiver, personal computer, etc.) that is connection to the node apparatus 202 via a coaxial cable, LAN (Local Area Network) cable or the like comprises these components.

### [ Request-reception-data-transmission Process by a Broadcasting Apparatus]

First, the process for transmitting request-reception data by the broadcasting apparatus 201 of this invention will be explained in detail.

The process of sending request-reception data from the broadcasting apparatus 201 to node apparatuses 202, and the process of receiving reply-result information Ans from the node apparatuses 202 will be explained using Fig. 11 to Fig. 15.

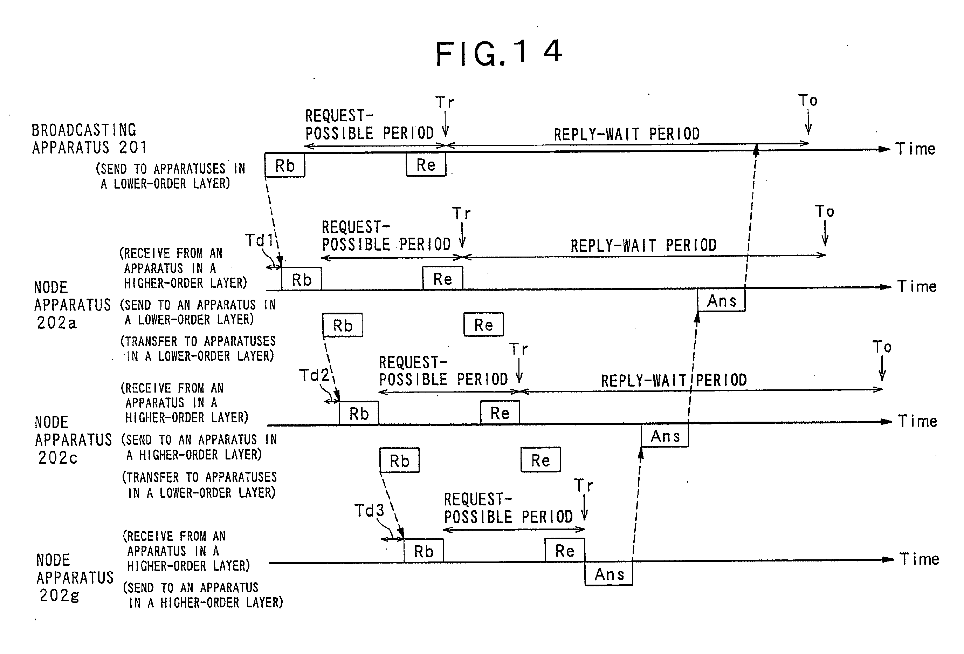

Fig. 14 is a drawing explaining the sending and receiving of request-reception data and reply-result information Ans between the broadcasting apparatus 201 and node apparatuses 202, where in the same drawing, various kinds of data are sent and received between the broadcasting apparatus 201 and node apparatus 202a, node apparatus 202c and node apparatus 202g.

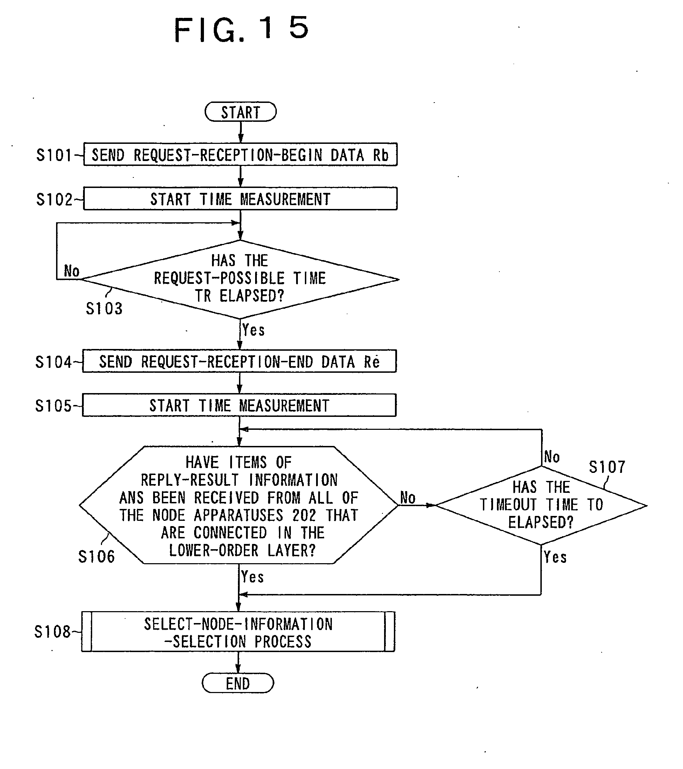

Fig. 15 is a flowchart of the process performed by the 211 of the broadcasting apparatus 201 for sending request-reception data, where the process shown in the flowchart is executed according to control from the control unit 211 based on a program that is stored beforehand in ROM (not shown in the figure) inside the control unit 211.

The process shown in Fig. 15 is begun by an instruction to send request-reception-begin data Rb that is given by an operator of the broadcasting apparatus 201 such as a disc jockey that operations the operation-input unit 213. Also, at this time, the operator enters the request-possible period Tr (for example 1 minute or 1 hour), and stores it in RAM (not shown in the figure) of the control unit.

First, the broadcasting apparatus 201 sends request-reception-begin data Rb to the node apparatuses 202 that are connected in the lower-order layer directly below (step S101). In the example shown in Fig. 11, the request-reception-begin data Rb is sent to the node apparatuses 202a and 202b that are connected in the lower-order layer directly below.

Also, the broadcasting apparatus 201 uses the internal clock that is equipped in the broadcasting apparatus 201 to begin measuring the time (step S102). Next, the broadcasting apparatus 201 determines whether or not the request-possible period Tr that was stored in the RAM of the control unit 211 has elapsed (step S103), and when it determines that the request-possible period Tr has not yet elapsed (step S103: No), it repeats the processing of that step S103. In other words, the broadcasting apparatus 201 waits for the request-possible period Tr to elapse before going to the next process.

On the other hand, when the broadcasting apparatus 201 determines that the request-possible period Tr has elapsed (step S103: Yes), it sends request-reception-end data Re to the node apparatuses 202 that are connected in the lower-order layer directly below (in the example shown in Fig. 11, node apparatuses 202a and 202b) (step S104).

In the example shown in Fig. 14, after request-reception-begin data Rb has been sent from the broadcasting apparatus 201 to node apparatus 202a, the broadcasting apparatus 201 sends request-reception-end data to node apparatus 202a only after the request-possible period Tr has elapsed.

When doing this, depending on the communication load between the broadcasting apparatus 201, node apparatus 202a, node apparatus 202c and node apparatus 202g, transmission delay times Td1, Td2 and Td3 occur in the data communication, respectively, however, construction is such that the broadcasting apparatus 201 individually sends (distributes) request-reception-end data Re to each of the node apparatuses 202 indicating the end of the request-possible period Tr during which request input can be received, so it is possible for each of the node apparatuses 202 as well to accurately maintain the request-possible period Tr that is set by broadcasting apparatus 201.

Next, the broadcasting apparatus 201 starts time measurement again (step S105).

Next, the broadcasting apparatus 201 determines whether or not reply-result information Ans has been received from all of the node apparatuses 202 that are connected in the lower-order layer directly below (step S106). When as a result of this judgment, it is determined that reply-result information Ans has not been received from all of the node apparatuses 202 that are connected in the lower-order layer directly below (step S106: No), the broadcasting apparatus 201 determines whether or not a preset timeout time To has elapsed (step S107), and when the timeout time To has not yet elapsed (step S107: No), processing returns to step S106.

On the other hand, when as a result of the judgment in step S106, it is determined that reply-result information Ans has been received from all of the node apparatuses 202 that are connected in the lower-order layer directly below (step S106: Yes), or when as a result of the judgment in step S107 it is determined that the timeout time To has elapsed (step S107: Yes), the broadcasting apparatus 201 performs the select-node-information-selection process (step S108).

The method for performing the select-node-information-selection process is the same as that of the select-node-information-selection process by the node apparatuses 202, so will be explained in detail later.

### [Reply-result-information-transmission Process by a Node Apparatus]

Next, the process of sending reply-result information by a node apparatus 202 of this invention will be explained in detail using Fig. 11 to Fig. 17.

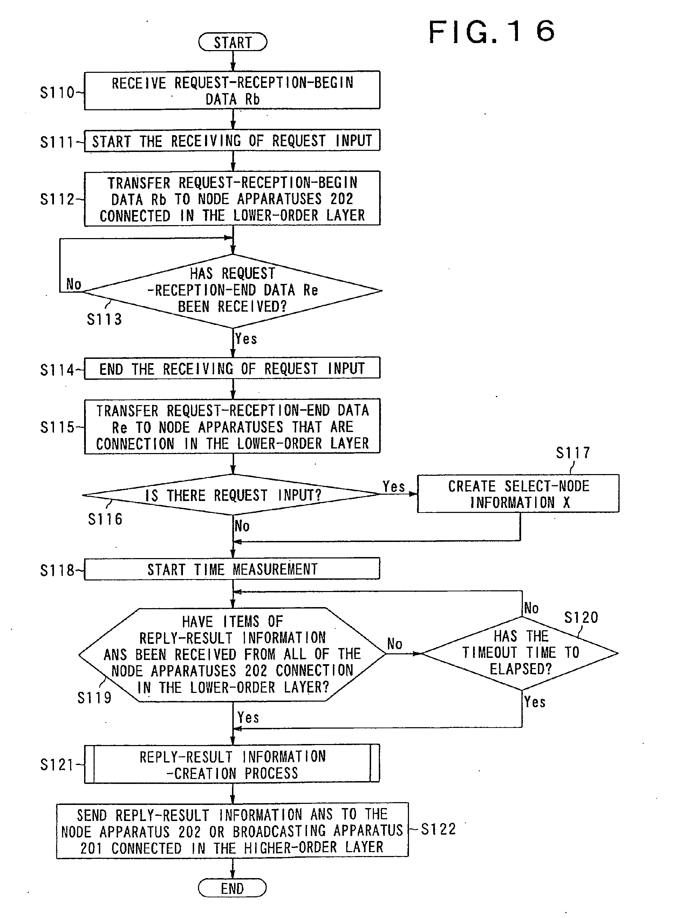

Fig. 16 is a flowchart showing the reply-result-information-transmission process that is performed by the 221 of a node apparatus 202.
Here, the method of creating new reply-result information Ans based on the reply-result information Ans that was sent from node apparatuses 202 that are connected in the lower-order layer directly below, and select-node information X that was created by the node apparatus itself, and sending that newly created reply-result information Ans to a node apparatus 202 or to the broadcasting apparatus 201 that is connected in the higher-order layer, is explained. Therefore, except for node apparatuses 202g to 202p, which are of the lowest-order layer, the processing of step S118 to step S120 of this process, is processing that is performed by node apparatuses 202a to 202f.

First, when request-reception-begin data Rb is received from the broadcasting apparatus 201 or from a node apparatus 202 that is connected in the higher-order layer directly above (step S110), the node apparatus 202 begins receiving request input (step S111). More specifically, after the decoder unit 224 decodes the received request-reception-begin data Rb and specified output processing has been performed by the video-processing unit 225 and/or audio-processing unit 226, a combined video and audio message, such as 'Viewers (or listeners) having a request, please press the request button.' , is output from the display unit M and/or speaker U, and when the user desires to make a request, the user operates the operation-input unit 227 to place that request.

The node apparatus 202 also transfers the request-reception-begin data Rb to node apparatuses 202 that are connected in the lower-order layer directly below by way of communication unit 228 (step S112). In the example shown in Fig. 11, node apparatus 202a transfers the request-reception-begin data Rb to node apparatus 202c, and node apparatus 202c transfers it to node apparatuses 202g to 202i.

Next, the node apparatus 202 uses ID code that is attached to the request-reception data to determine whether or not request-reception-end data Re has been received (step S113). When the node apparatus 202 determines that request-reception-end data Re has not yet been received (step S113: No), it repeats the processing of step S113. In other words, it waits until the request-reception-end data Re has been received before performing the next process.

On the other hand, when the node apparatus determines that the request-reception-end data Re has been received (step S113: Yes), it ends receiving request input (step S114) . More specifically, after the decoder unit 224 decodes the received request-reception-end data Re and specified processing has been performed by the video-processing unit 225 and/or audio-processing unit 226, a combined video and audio message, such as ' The receiving of requests has ended. Thank you very much.', is output from the display unit M and/or speaker U, and the user stops using the operation-input unit 227 to make requests. Also, even though the user may operate the operation-input unit 227, control is performed at the step when the request-reception-end data Re is received to stop receiving request input.

Moreover, the node apparatus 202 transfers the request-reception-end data Re to the node apparatuses that are connected in the lower-order layer directly below by way of the communication unit 228 (step S115). In the example shown in Fig. 11, node apparatus 202a transfers the request-reception-end data Re to node apparatus 202c, and node apparatus 202c transfers the request-reception-end data Re to node apparatuses 202g to 202i.

Also, the node apparatus 202 determines whether or not there is request input from after the time that receiving of request input begins in step S111 until the time that receiving of request input ends in step S114 (step S116). When as a result of the judgment it is determined that there was no request input (step S116: No), processing moves to step S118. However, when as a result of judgment it is determined that there was request input (step S116: Yes), the node apparatus 202 creates select-node information X that indicates that there was a request (step S117). The select-node information X that was created by the node itself is used when performing the reply-result-information-creation process described later, so it is stored in the memory unit 222. When there was no request input in step S116, select-node information for the node apparatus itself is not created.

Also, the node apparatus 202 uses the internal clock of the node apparatus 202 to start measuring time (step S118).

Next, the node apparatus 202 determines whether or not reply-result information Ans has been received from all of the node apparatuses 202 that are connected in the lower-order layer directly below (step S119). When as a result of judgment, the node apparatus 202 determines that reply-result information Ans has not been received from all of the node apparatuses 202 connected in the lower-order layer directly below (step S119: No), it determines whether or not a timeout time To that was set in advance as a receiving-wait time has elapsed (step S120), and when it determines that the timeout time To has not yet elapsed (step S120: No), it returns to step S119.

On the other hand, when as a result of the judgment in step S119, the node apparatus 202 determines that reply-result information Ans has been received from all of the node apparatuses 202 that are connected in the lower-order layer directly below (step S119: Yes), or, when as a result of the judgment in step S120, determines that the timeout time To has elapsed (step S120: Yes), it performs the reply-result-information-creation process based on the reply-result information Ans that was received in time (step S121). In the case where there are no node apparatuses 202 connected in the lower-order layer directly below, the node apparatus 202 does not execute steps S118 to S120.

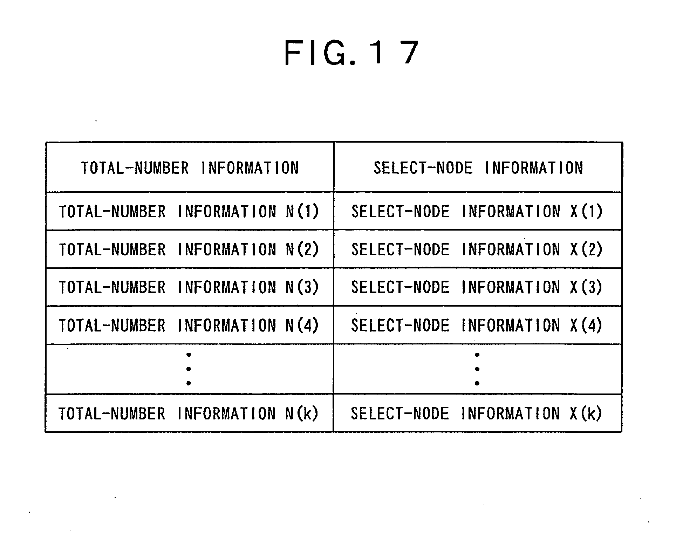

Also, total-number information N and select-node information X selected by the node apparatuses 202 that are connected in the lower-order layer directly below are included in the reply-result information Ans that is sent from the node apparatuses 202 that are connected in the lower-order layer directly below, and as shown in Fig. 17, a plurality of these items of reply-result information Ans are saved in the memory unit 222. In other words, in the case where there are k number of node apparatuses 202 that are connected in the lower-order layer directly below, k number of items of total-number information N and items of select-node information X are correlated and saved in the memory unit 222.

Also, the node apparatus 202 sends the reply-result information Ans that is created in the reply-result-information-creation process to be described later to the node apparatus 202 that is connected in the higher-order layer directly above (node apparatuses 202a and 202b send reply-result information Ans to the broadcasting apparatus 201) (step S122), and then ends processing.

### [Reply-result-information-creation Process]

Next, the reply-result-information process of step S121 mentioned above will be explained.

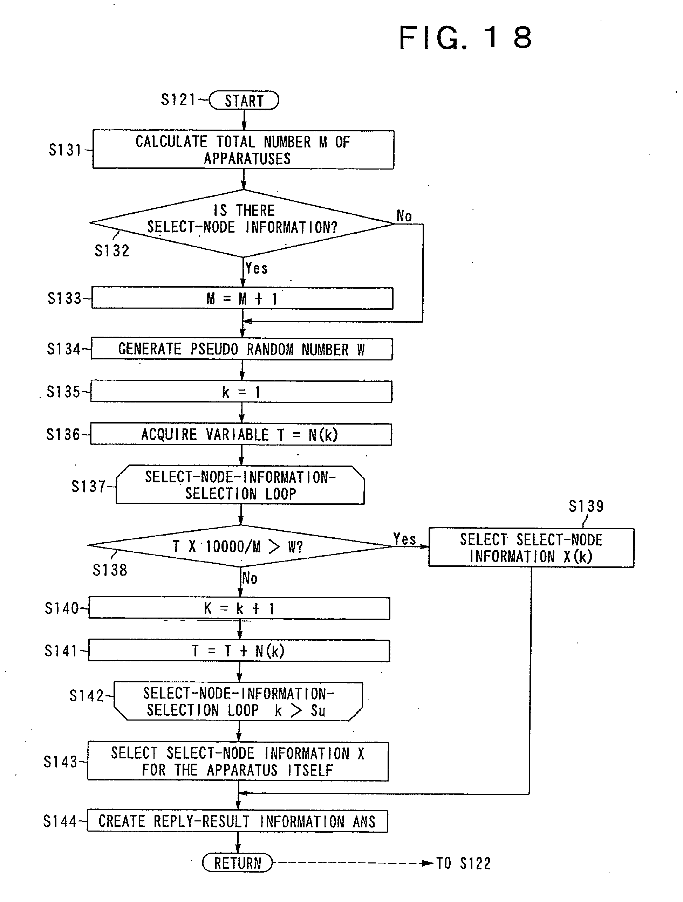

Fig. 18 is a flowchart showing the reply-result-information-creation process that is performed by the control unit 221 of a node apparatus 202. In the explanation below, it is supposed that the node apparatuses 202g to 202p of the lowest-order layer have made requests, and in that case, the node apparatuses 202g to 202p of the lowest-order layer create reply-result information Ans as the select-node information X created by the node apparatus itself, and total-number information N as 1, and send that information to the respective node apparatuses 202c to 202f that are connected in the higher-order layer directly above.

First, based on the reply-result information Ans that is sent from each of the node apparatuses 202 that are connected in the lower-order layer directly below, the node apparatus 202 calculates the total number of apparatuses M in the lower-order layers below that node apparatus 202 (step S131).

In other words, as shown in Fig. 17, the node apparatus 202 totals all of the total-number information N1, N2, N3, N3, ... N (k) that is stored in the memory unit 222 to obtain the total number of apparatuses M.

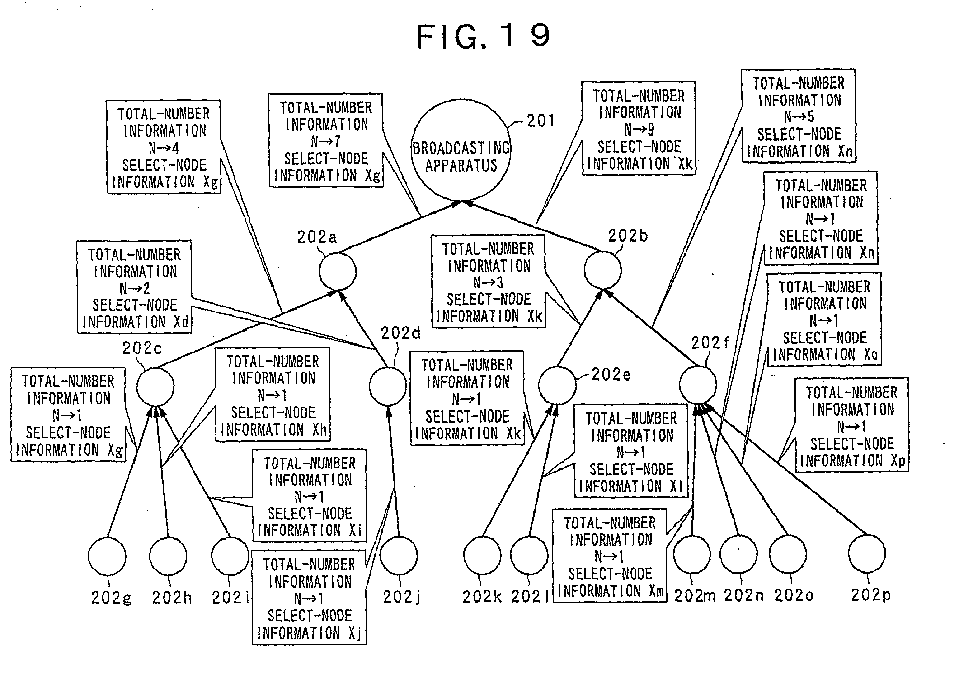

Here, Fig. 19 will be used to explain the total-number information N in more detail.

First, node apparatus 202c sends one item of select-node information X that it selected from among the select-node information X that was included in the reply-result information Ans that was sent from each of the node apparatuses 202 that are connected in the lower-order layer directly below (in the example shown in Fig. 19, node apparatuses 202g, 202h and 202i) and the select-node information X that node apparatus 202c created itself, and the total-number information N to node apparatus 202a as reply-result information Ans. Here, the total-number information N is the total number of node apparatuses 202 that are connected below the node apparatus 202c itself (3 in the example shown in Fig. 19) added to the number '1' for itself (the total is 4 in the example shown in Fig. 19).

Also, similarly, node apparatus 202d sends one item of select-node information X that it selected from among the select-node information X that was included in the reply-result information Ans that was sent from the node apparatus 202 that is connected in the lower-order layer directly below (in the example shown in Fig. 19, node apparatus 202j), the select-node information X that node apparatus 202d created itself, and the total-number information N to node apparatus 202a as reply-result information Ans. Here, the total-number information N is the total number of node apparatuses 202 that are connected below the node apparatus 202d itself (1 in the example shown in Fig. 19) added to the number '1' for itself (the total is 2 in the example shown in Fig. 19).

By doing this, it is possible for node apparatus 202a, which received the respective items of reply-result information Ans from node apparatus 202c and node apparatus 202d, to know from the respective total-number information N how many items of select-node information X that the items of select-node information X, which were included in the respective items of reply-result information Ans that were sent from node apparatus 202c and node apparatus 202d, were selected from; and based on that can fairly select one item of select-node information X. The method of selecting select-node information X will be described in detail later.

For example, together with selecting select-node information Xg that was included in the reply-result information Ans that was sent from node apparatus 202g, node apparatus 202c obtains the total-number information as 4, and sends these to node apparatus 202a as reply-result information Ans.

On the other hand, in the case where node apparatus 202d selects select-node information Xd that it created itself, then together with that select-node information Xd, it obtains the total-number information N as 2 (node apparatus 202d and node apparatus 202j), and sends these to node apparatus 202a as reply-result information Ans.

By doing so, based on the items of reply-result information Ans that were sent from node apparatus 202c and node apparatus 202d that are connected in the lower-order layer directly below, the node apparatus 202a checks according to the items of total-number information N (in the example shown in Fig. 19, the items of total-number information N are 4 and 2) how many items of select-node information X the items of select-node information X (select-node information Xg and Xd in Fig. 19) that were selected by the node apparatus 202c and node apparatus 202d were selected from, and taking into consideration the weight of that, selects an item of select-node information X from among the items of select-node information Xg and Xd that were respectively selected by node apparatus 202c and node apparatus 202d. Also, node apparatus 202a creates reply-result information Ans based on the selected select-node information X (select-node information Xg in Fig. 19) and total-number information N (7 in the example shown in Fig. 19), and sends it to the broadcasting apparatus 201.

In other words, in step S131, a node apparatus 202 references the memory unit 222, and acquires and adds the items of total-number information N that were included in the items of reply-result information Ans that were sent from each of the node apparatuses 202 that are connected in the lower-order layer directly below, and calculates the total number of apparatuses M.

Next, the node apparatus 202 determines whether or not there is select-node information X in the memory unit 222 (step S132). In other words, when there is request input in step S116 described above, select-node information X that was created in step S117 is stored in the memory unit 222, and when there is no request input, there will be no select-node information X in the memory unit 222.

Also, when as a result of the judgment in step S132, it is determined that there is select-node information in the memory unit 222 (step S132: Yes), the node apparatus 202 adds one for itself to the total number of apparatuses M (step S133). However, when it is determined that there is no select-node information X in the memory unit 222 (step S132: No), the node apparatus 202 moves on to step S134.

The node apparatus 202 generates a pseudo random number W between 0 and 9999 (step S134). Also, the value 'k', which indicates the node apparatuses 202 that are connected in the lower-order layer directly below is initialized to '1' (step S135). Next, the total-number information N (k) that was sent from the kth node apparatus 202 of the node apparatuses 202 that are connected in the lower-order layer directly below is acquired as variable T (step S136).

Also, the node apparatus 202 selects select-node information based on the total-number information (step S137 to step S142).

First, the node apparatus 202 determines whether or not the pseudo random number W that was generated in step S134 is less than T x 10000/M (step S138). When as a result of the judgment it is determined that the pseudo random number W is less than T x 10000/M (step S138: Yes), node apparatus 202 selects select-node information X(k) (step S139).

For example, the case of performing processing by node apparatus 202a shown in Fig. 19 will be explained. Total-number information N (1) = 4 and select-node information Xg that are included in the reply-result information Ans that was sent from node apparatus 202c, and total-number information N(2) = 2 and select-node information Xd that were sent from node apparatus 202d are stored in the memory unit 222.

After that, supposing that in the processing of step S133 node apparatus 202a had select-node information in the memory unit 222, the explanation continues with the total number of apparatuses M acquired as being N(1) + N(2) + 1 = 4 + 2 + 1 = 7

Next, in the processing of step S136, first, variable T is acquired as being N(1), or in other words 4.

Therefore, in the judgment of step S138, T x 10000/M is calculated as 4 x 10000/7 = 5714.286.

In other words, when the pseudo random number W generated in step S134 is 0 to 5713, the select-node information Xg that was sent from node-apparatus 202c is selected by node apparatus 202a as select-node information Xg.

On the other hand, when the pseudo random number is 5714 or greater, node apparatus 202a moves to the processing of step S140.

Next, node apparatus 202 adds one to the value 'k' that indicates the node apparatus 202 (step S140), and obtains a new variable T (step S141). In other words, in the example shown in Fig. 19, node apparatus 202a obtains as the variable T = N(1) + N(2) = 4 + 2 = 6. Also, the node apparatus 202 returns to the processing of step S137 (step S142) and repeats steps S137 to S142 until the value 'k' exceeds the number of node apparatuses Su that are connected in the lower-order layer directly below, and ends the loop when k' exceeds the number Su.

When it is not possible to select one item of select-node information X in step S137 to step S142, the node apparatus 202 selects the select-node information X that it created itself (step S143).

Also, together with obtaining the select-node information X that was selected in step S139 or step S143, the node apparatus 202 acquires the total number of apparatuses M as the total-number information N, then creates reply-result information Ans with these (step S144) and ends processing.

In other words, in the example shown in Fig 19, in the processing of the first loop for selecting select-node information described above, when the pseudo number W generated in step S134 is between 0 to 5713, node apparatus 202a selects the select-node information Xg that was sent from node apparatus 202c as the select-node information. When this is not the case, then in the processing of the second loop for selecting select-node information, T x 10000/M is calculated as being (4 + 2) x 10000/7 = 8571. 429, so when the pseudo random number W that was generated in step S134 is between 5714 to 8570, node apparatus 202a selects the select-node information Xd that was sent from node apparatus 202d as the select-node information.

When this is not the case (in other words, when the pseudo random number W is 8571 or greater), then node apparatus 202a selects the select-node information Xa that it created itself in step S143. In other words, the probability that node apparatus 202a will select node apparatus 202g that was selected by node apparatus 202c having a large value for total-number information N is larger than the probability of selecting node apparatus 202d that is selected by node apparatus 202d having a small I value for total-number information N. That is, the probability that select-node information Xg that was sent from node apparatus 202c will be selected is 5713/1000 = 4/7, and the probability that select-node information Xd that was sent from node apparatus 202d will be selected is (8570 - 5713)/10000 = 2/7, and the probability that the select-node information Xa that was created by node apparatus 202a will be selected is (9999 - 8570)/10000 = 1/7. As a result, construction is possible in which the items of select-node information X that are generated by all of the node apparatuses 202 participating in the tree-type network system are selected equally.

With the embodiment of the invention described above, construction is such that select-node information X is received from the node apparatuses 202 that are connected in the lower-order layer directly below as reply-result information Ans, and new reply-result information Ans is created based on that reply-result information Ans and then sent to the node apparatus 202 (or broadcasting apparatus 201) that is connected in the higher-order layer directly above, so it is possible to reduce concentration of load (access) in upstream communication paths of the network (for example a certain router IP) and in upstream node apparatuses 202, and thus it is possible to improve the operating efficiency of the system.

Also, when the broadcasting apparatus 201, which makes an inquiry such as a request, asks for requests, and the broadcasting apparatus 201 selects one of the items of select-node information X from among the items of select-node information X that were sent from downstream node apparatuses 202, construction is such that when each node apparatus 202 receives items of select-node information X from each of the node apparatuses that are connected in the lower-order layer directly below as reply-result information Ans, and creates new reply-result information Ans based on that reply-result information Ans, each node apparatus 202 selects select-node information X, then creates reply-result information Ans that includes that selected select-node information X and sends it to the node apparatus 202 that is connected in the higher-order layer directly above, so the broadcasting apparatus 201 only needs to select one item of select-node information X from the items of select-node information X that were sent from the node apparatuses 202 that are connected in the lower-order layer directly below (node apparatuses 202a and 202b in the example shown in the Fig. 19), so selection of the select-node information can be performed more efficiently.

Furthermore, when selecting one item of select-node information X from among the items of select-node information X from the node apparatuses 202 that are connected in the lower-order layer directly below and the select-node information X created by the node apparatus itself, and then sending it to the node apparatus 202 that is connected in the higher-order layer directly above, total-number information N, which indicates how many items of select-node information X that the selected select-node information X was selected from, is also included in the reply-result information Ans, so construction is such that when selecting one item of select-node information X from the items of select-node information X that are included in the items of reply-result information Ans that are sent from the node apparatuses 202 that are connected in the lower-order layer directly below, it is possible to select one item of select-node information taking into consideration its weight, so that the items of select-node information X that are created by all of the node apparatuses 202 are selected equally.

The select-node-information-selection process that is performed by the broadcasting apparatus 201 in step S108 is the same as the select-node-information-selection process that is performed by the node apparatuses 202 as described above, so when the broadcasting apparatus 2 finally selects one item of select-node information, construction is such that it is possible to perform selection equally from the items of select-node information that are created by all of the node apparatuses participating in the tree-type network system S.

In the embodiment described above, the timeout time To in step S107 and the timeout time To in step S120 are set the same, however, the invention is not limited to this, and it is possible to suitably change the settings according to the connection state of the node apparatuses (ISP, DSL, etc.), the performance of the apparatuses, or the like.

Also, in the embodiment described above, request-reception data was sent to the node apparatuses 202 as multimedia information, however, the invention is not limited to this, and it is also possible to send it a simply a marker signal. In other words, request-reception-start data Rb is sent as a starting marker to indicate the start of the reception of request input, and request-reception-end data Re is sent as an ending marker indicating the end of the reception of request input. In this case, the node apparatuses 202 that receive these signals can be such that they reproduce and output images and audio that indicated the start (or the end( of the reception of request input.

Moreover, in the embodiment described above, the node apparatuses 202g to 202p of the lowest-order layer were explained as performing requests properly, however, when a user does not press the request button for example, the select-node information X for that node apparatus itself is not generated, (or information indication 'nothing has been selected' is generated) and information indicating that there is no select-node information in the reply-result information Ans and that the total-number information N is '0' is sent.

Furthermore, the contents of the request-reception-start data Rb that is sent from the broadcasting apparatus 201 comprises O x quiz, and by having construction such that together with sending correct-answer information indicating the correct answer along with the request-reception-start data Rb, the control unit 221 of a node apparatus 202 functions as a judgment means and determines whether or not the input from each of the node apparatuses matches the correct answer to the quiz, and when the select-node information X that is created based on that input does not match the correct answer to the quiz, that created select-node information X is removed as an object of selection in the select-node-information-selection process described above. By doing so it is possible to apply this invention to a viewer-participation-type of quiz. In the case where input does not match the correct answer to the quiz, construction can be such that no select-node information X is created.

Also, in the embodiment described above, pseudo random numbers were generated between 0 and 9999, however, when the number of all of the node apparatuses 202 that participate in the tree-type network system S is a larger number (for example, 10, 000 or more), in order to reduce the round off error when making the result of the probability calculation an integer, it is possible to use a larger range of random numbers.

Also, in the embodiment described above, one item of select-node information X was selected from among the items of select-node information included in the items of reply-result information Ans that were sent from each of the node apparatuses 202 that are connected in the lower-order layer directly below, and sent to the node apparatus 202 or broadcasting apparatus 201 that is connected in the higher-order directly above, however, the invention is not limited to this, and construction can be such that a specified number of items of select-node information X be sent. In that case, in the processing of step S134 described above only a specified number of pseudo random numbers are generated, and a select-node-information-selection loop (step S137 to step S143) is performed for each pseudo random number W in order to select a specified number of items of select-node information X and then send that specified number of select-node information X included in the reply-result information Ans.

## Claims

1. A distribution apparatus that distributes distribution information and that is part of a tree-type distribution system made up of said distribution apparatus and a plurality of receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, comprising:
a first distribution-information-distribution means for distributing first distribution information so that said first distribution information that includes an inquiry message is distributed to said receiving apparatuses on a plurality of communication paths ;
a receiving-apparatus-selection means for selecting one said receiving apparatus that is connected to said distribution apparatus and to which second distribution information that includes a collection message for collecting response messages that correspond to said inquiry message that are generated by each said receiving apparatus is to be distributed ;
a second distribution-information-distribution means for distributing said second distribution information to said selected one receiving apparatus so that said second distribution information is transferred in order via one communication path from among said plurality of communication paths; and
a collected-information-receiving means for receiving collected information that is sent from one of said receiving apparatuses on one of said communication paths along which said second distribution information is transferred in order and that includes said collection message to which said response message that was attached by said receiving apparatus on that one communication path is added.

2. The distribution apparatus of claim 1 wherein
said receiving-apparatus selection means selects one of said receiving apparatuses from among a plurality of receiving apparatuses that are connected to said distribution apparatus by a probability that is proportional to the number of receiving apparatuses located in the levels below each of said receiving apparatuses.

3. The distribution apparatus of claim 1 or claim 2, wherein
said collected information is sent from said receiving apparatus that is located in the lowest level of said one communication path.

4. The distribution apparatus of any one of the claims 1 thru 3, further comprising message-collection-condition-judgment means for determining, based on said collected information, whether or not a specified message-collection condition has been satisfied: wherein
when said message-collection-condition-judgment means has determined that said message-collection condition has not been satisfied, said receiving-apparatus-selection means selects one of said receiving apparatuses that is connected to said distribution apparatus ; and
said second distribution-information-distribution means distributes said second distribution information to said selected one receiving apparatus.

5. The distribution apparatus of claim 4, wherein
said receiving-apparatus-selection means selects one of said receiving apparatuses from among a the plurality of said receiving apparatuses that are connected to the distribution apparatus with a probability that is proportional to the number of said receiving apparatuses located in the levels below each said receiving apparatus.

6. The distribution apparatus of claim 4 or claim 5, wherein
said receiving-apparatus-selection means selects one receiving apparatus other than a receiving apparatus selected that was selected previously.

7. The distribution apparatus of claim 1 or claim 2, wherein
said second distribution information contains information that indicates a specified message-collection condition: and
said collected information is sent from said receiving apparatus on said communication path when that message-collection condition is satisfied.

8. The distribution apparatus of any one of the claims 4 to 7, wherein
said message-collection condition contains at least one of a condition that specifies the number of said response messages to be collected, a condition that specifies the number of valid answers included in said response message, and a condition that specifies the number of times said second distribution information is to be transferred.

9. The distribution apparatus of any one of the claims 1 to 8, wherein
said response messages from said receiving apparatuses on said one communication path and ID information unique to each of said receiving apparatuses are correlated and attached to said collection message.

10. A receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, comprising:
a first distribution-information-receiving means for receiving first distribution information that includes an inquiry message from said distribution apparatus or said receiving apparatus located in the level above:
a response-message-generation means for generating a response message for said inquiry message;
a second distribution-information-receiving means for receiving second distribution information that includes a collection message for collecting said response message from said distribution apparatus or said receiving apparatus that is located in the level above;
a response-message-adding means for adding said generated response message to a collection message that is included in said second distribution information:
a lower-level-judgment means for determining whether or not there is another connected said receiving apparatus in the level below; and
a collected-information-transmission means for sending collected information that includes said collection message to which said response messages have been added to said distribution apparatus.

11. A receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, comprising:
a first distribution-information-receiving means for receiving first distribution information that includes an inquiry message from said distribution apparatus or said receiving apparatus located in the level above;
a response-message-generation means for generating a response message for said inquiry message:
a second distribution-information-receiving means for receiving second distribution information that includes a collection message for collecting said response message from said distribution apparatus or said receiving apparatus that is located in the level above, and information indicating a specified message-collection condition:
a response-message-adding means for adding said generated response message to a collection message that is included in said second distribution information:
a message-collection-condition-judgment means for determining whether or not said specified message-collection condition that is included in said second distribution information is satisfied: and
a collected-information-transmission means for directly sending collected information that includes said collection message to which said response messages have been added to said distribution apparatus when said message-collection-condition-judgment means determined that said message-collection condition was satisfied.

12. The receiving apparatus of claim 11 further comprising:
a lower-level-judgment means for determining whether or not there is another connected said receiving apparatus in the level below when said message-collection-condition-judgment means determined that said message-collection condition is not satisfied: and
a collected-information-transmission means for sending collected information that includes said collection message to which said response messages have been added to said distribution apparatus when said lower-level-judgment means determined that another said receiving apparatus is not connected.

13. The receiving apparatus of claim 10 or claim 12 further comprising:
a receiving-apparatus-selection means for selecting one said receiving apparatus that is connected in the level below said receiving apparatus to which collected information that includes said collection message to which said response messages have been added is to be sent, when said lower-level-judgment means determined that there is another connected receiving apparatus in the level below; and
a collected-information-transfer means for transferring said collected information to said selected receiving apparatus.

14. The receiving apparatus of claim 13, wherein
said receiving-apparatus-selection means selects one said receiving apparatus from among a plurality of said receiving apparatuses that are connected in the level below said receiving apparatus with a probability that is proportional to the number of said receiving apparatuses that are located in the levels below each said receiving apparatus.

15. The receiving apparatus of claim 13 or 14, wherein
said receiving-apparatus-selection means selects another said receiving apparatus that is not a previously selected receiving apparatus.

16. The receiving apparatus of any one of the claims 11 to 15, wherein
said message-collection condition contains at least one of a condition that specified the number of said response messages to be collected, a condition that specifies the number of valid answers included in said response message, and a condition that specifies the number of times said second distribution information is to be transferred.

17. The receiving apparatus of any one of the claims 10 to 16, wherein
said response-message-adding means correlates said generated response message with ID information unique to that receiving apparatus and adds them to said collection message that is included in said second distribution information.

18. An information-processing method for a distribution apparatus that distributes distribution information and that is part of a tree-type distribution system made up of said distribution apparatus and a plurality of receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, comprising steps of:
distributing first distribution information so that said first distribution information that includes an inquiry message is distributed to said receiving apparatuses on a plurality of communication paths:
selecting one said receiving apparatus that is connected to said distribution apparatus and to which second distribution information that includes a collection message for collecting response messages corresponding to said inquiry message that are generated by each said receiving apparatus is to be distributed:
distributing said second distribution information to said selected one receiving apparatus so that said second distribution information is transferred in order via one communication path from among said plurality of communication paths: and
receiving collected information that is sent from one of said receiving apparatuses on one of said communication paths along which said second distribution information is transferred in order and that includes said collection message to which said response message that was attached by said receiving apparatus on that one communication path is added.

19. An information processing method for a receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, comprising steps of:
receiving first distribution information that includes an inquiry message from said distribution apparatus or said receiving apparatus located in the level above;
generating a response message for said inquiry message;
receiving second distribution information that includes a collection message for collecting said response message from said distribution apparatus or said receiving apparatus that is located in the level above:
adding said generated response message to a collection message that is included in said second distribution information :
determining whether or not there is another connected said receiving apparatus in the level below ; and
sending collected information that includes said collection message to which said response messages have been added to said distribution apparatus.

20. An information processing method for a receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, comprising steps of:
receiving first distribution information that includes an inquiry message from said distribution apparatus or said receiving apparatus located in the level above;
generating a response message for said inquiry message;
receiving second distribution information that includes a collection message for collecting said response message from said distribution apparatus or said receiving apparatus that is located in the level above, and information indicating a specified message-collection condition ;
adding said generated response message to a collection message that is included in said second distribution information:
determining whether or not said specified message-collection condition that is included in said second distribution information is satisfied: and
sending collected information that includes said collection message to which said response messages have been added to said distribution apparatus when said message-collection-condition-judgment means determined that said message-collection condition was satisfied.

21. An information processing program that makes a computer in a distribution apparatus that distributes distribution information and that is part of a tree-type distribution system made up of said distribution apparatus and a plurality of receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, function as:
a first distribution-information-distribution means for distributing first distribution information so that said first distribution information that includes an inquiry message is distributed to said receiving apparatuses on a plurality of communication paths ;
a receiving-apparatus-selection means for selecting one said receiving apparatus that is connected to said distribution apparatus and to which second distribution information that includes a collection message for collecting response messages that correspond to said inquiry message that are generated by each said receiving apparatus is to be distributed:
a second distribution-information-distribution means for distributing said second distribution information to said selected one receiving apparatus so that said second distribution information is transferred in order via one communication path from among said plurality of communication paths: and
a collected-information-receiving means for receiving collected information that is sent from one of said receiving apparatuses on one of said communication paths along which said second distribution information is transferred in order and that includes said collection message to which said response message that was attached by said receiving apparatus on that one communication path is added.

22. An information processing program that makes a computer in a receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, function as:
a first distribution-information-receiving means for receiving first distribution information that includes an inquiry message from said distribution apparatus or said receiving apparatus located in the level above ;
a response-message-generation means for generating a response message for said inquiry message:
a second distribution-information-receiving means for receiving second distribution information that includes a collection message for collecting said response message from said distribution apparatus or said receiving apparatus that is located in the level above ;
a response-message-adding means for adding said generated response message to a collection message that is included in said second distribution information:
a lower-level-judgment means for determining whether or not there is another connected said receiving apparatus in the level below: and
a collected-information-transmission means for sending collected information that includes said collection message to which said response messages have been added to said distribution apparatus.

23. An information processing program that makes a computer in a receiving apparatus that is part of a tree-type distribution system made up of said distribution apparatus that distributes distribution information and a plurality of said receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, function as:
a first distribution-information-receiving means for receiving first distribution information that includes an inquiry message from said distribution apparatus or said receiving apparatus located in the level above:
a response-message-generation means for generating a response message for said inquiry message:
a second distribution-information-receiving means for receiving second distribution information that includes a collection message for collecting said response message from said distribution apparatus or said receiving apparatus that is located in the level above, and information indicating a specified message-collection condition:
a response-message-adding means for adding said generated response message to a collection message that is included in said second distribution information;
a message-collection-condition-judgment means for determining whether or not said specified message-collection condition that is included in said second distribution information is satisfied; and
a collected-information-transmission means for directly sending collected information that includes said collection message to which said response messages have been added to said distribution apparatus when said message-collection-condition-judgment means determined that said message-collection condition was satisfied.

24. A recording medium on which said information-processing program of any one of the claims 21 to 23 is recorded so that it can be read by a computer.

25. A tree-type distribution system comprising a distribution apparatus that distributes distribution information and a plurality of receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, wherein
said distribution apparatus comprises:
a first distribution-information-distribution means for distributing first distribution information so that said first distribution information that includes an inquiry message is distributed to said receiving apparatuses on a plurality of communication paths;
a receiving-apparatus-selection means for selecting one said receiving apparatus that is connected to said distribution apparatus and to which second distribution information that includes a collection message for collecting response messages that correspond to said inquiry message is to be distributed: and
a second distribution-information-distribution means for distributing said second distribution information to said selected one receiving apparatus: and
said receiving apparatus comprises:
a first distribution-information-receiving means for receiving first distribution information from said distribution apparatus or said receiving apparatus located in the level above:
a response-message-generation means for generating a response message for said inquiry message:
a second distribution-information-receiving means for receiving second distribution information from said distribution apparatus or said receiving apparatus that is located in the level above:
a response-message-adding means for adding said generated response message to a collection message that is included in said second distribution information:
a lower-level-judgment means for determining whether or not there is another connected said receiving apparatus in the level below: and
a collected-information-transmission/transfer means for sending collected information that includes said collection message to which said response messages have been added to said distribution apparatus when said lower-level-judgment means has determined that said other receiving apparatus is not connected, and transferring said collected information that includes said collection message to which said response messages have been added to one of said receiving apparatuses that is connected in the level below.

26. A tree-type distribution system comprising a distribution apparatus that distributes distribution information and a plurality of receiving apparatuses that receive said distribution information, with said apparatuses being connected in a tree shape via a plurality of communication paths and with said distribution apparatus forming the highest level and said plurality of receiving apparatuses forming a plurality of levels, so that said distribution information that is distributed from said distribution apparatus is transferred in order to said receiving apparatuses in a lower level from said receiving apparatuses in a higher level, wherein
said distribution apparatus comprises:
a first distribution-information-distribution means for distributing first distribution information so that said first distribution information that includes an inquiry message is distributed to said receiving apparatuses on a plurality of communication paths;
a receiving-apparatus-selection means for selecting one said receiving apparatus that is connected to said distribution apparatus and to which second distribution information that includes a collection message for collecting response messages that correspond to said inquiry message and information indicating a specified message-collected condition is to be distributed: and
a second distribution-information-distribution means for distributing said second distribution information to said selected one receiving apparatus; and
said receiving apparatus comprises:
a first distribution-information-receiving means for receiving first distribution information from said distribution apparatus or said receiving apparatus located in the level above ;
a response-message-generation means for generating a response message for said inquiry message:
a second distribution-information-receiving means for receiving said second distribution information from said distribution apparatus or said receiving apparatus that is located in the level above;
a response-message-adding means for adding said generated response message to a collection message that is included in said second distribution information;
a message-collection-condition-judgment means for determining whether or not said specified message-collection condition that is included in said second distribution information is satisfied: and
a collected-information-transmission/transfer means for sending collected information that includes said collection message to which said response messages have been added to said distribution apparatus when said message-collection-condition-judgment means determined that said message-collection condition was satisfied, and transferring said collected information that includes said collection message to which said response messages have been added to one of said receiving apparatuses that is connected in the level below when said message-collection-condition-judgment means determined that said message-collection condition was not satisfied.

27. A processing apparatus in a tree-type network system that comprises an inquiry apparatus that sends inquiry information requesting that reply-result information be sent, and a plurality of processing apparatuses that receive said inquiry information, where said inquiry apparatus is connected to said plurality of processing apparatuses in a tree shape via communication paths so that said inquiry apparatus is the highest and said plurality of processing apparatuses form a plurality of layers, and said inquiry information that is sent from said inquiry apparatus is successively transferred from said processing apparatuses in a higher order to said processing apparatuses in a lower order, wherein one of said processing apparatuses comprises:
an inquiry-information-receiving means for receiving said inquiry information that is sent from another said processing apparatus that is connected in a higher-order layer above said one processing apparatus or from said inquiry apparatus:
an inquiry-information-transfer means for transferring said received inquiry information to one or more of said other processing apparatuses that are connected in a lower-order layer below said one processing apparatus ;
a reply-result-information-receiving means for receiving said reply-result information that includes reply information for said inquiry information and that is sent from at least one or more of said other processing apparatuses that are connected in said lower-order layer:
a reply-information-creation means for said one processing apparatus to create its own said reply-result information for said inquiry information:
a reply-result-information-creation means for said one processing apparatus to create its own reply-result information based on reply-result information received by said reply-result-information-receiving means, and reply information created by said reply-information-creation means: and
a reply-result-information-reply means for sending said created reply-result information to another said processing apparatus or inquiry apparatus that is connected in a higher-order layer and that is the transmission source of inquiry information that was received by said inquiry-information-receiving means.

28. The processing apparatus of claim 27 further comprising
a selection means for selecting a specified number of items of said reply information from among reply information that is included in said reply-result information that is received by said reply-result-information-receiving means, and reply information that is created by said reply-result-information-creation means; wherein
said reply-result-information-creation means creates said reply-result information that includes said selected specified number of items of said reply information.

29. The processing apparatus of claim 28 further comprising:
a total-number-information-acquisition means for acquiring the sum of the total number of said other processing apparatuses connected in said lower-order layer plus '1' as total-number information: and
a total-number-information-transmission means for sending said total-number information to said other processing apparatus or said inquiry apparatus that is the transmission source of inquiry information that was received by said inquiry-information-receiving means and that is connected in said higher-order layer: wherein
said selection means selects said specified number of items of reply information based on said total-number information that was sent from said other processing apparatuses that are connected in said lower-order layer.

30. The processing apparatus of claim 29 wherein
said total-number-information-transmission means sends said total-number information when said reply-result-information-reply means sends said reply-result information.

31. The processing apparatus of any one of the claims 27 to 30 further comprising:
an end- information-receiving means for receiving end information from said other processing apparatus or from said inquiry apparatus that is connected in said higher-order layer and that gives an instruction to end the receiving of answer information to said inquiry information: and
an answer-information-input -receiving means for receiving input of said answer information from when said inquiry information is received by said inquiry-information-receiving means until said end information is received by said end-information-receiving means: wherein
said reply-information-creation means creates said reply information based on input of said answer information that is received by said answer-information-input-receiving means.

32. The processing apparatus of any one of the claims 27 to 31 further comprising
a wait-time-setting means for setting receiving-wait time for receiving said reply-result information from said other processing apparatuses that are connected in said lower-order layer; wherein
said reply-result-information-creation means creates reply-result information for said one processing apparatus itself based on said reply-result information that was received by said reply-result-information-receiving means within said receiving-wait time.

33. The processing apparatus of anyone of the claims 28 to 32 further comprising
a judgment means for determining whether or not reply information that was created by said reply-information-creation means corresponds to inquiry information that was received by said inquiry-information-receiving means ; wherein
said selection means removes reply information that was created by said reply-information-creation means as an object of selection when it was determined that the reply information does not correspond with said inquiry information, and selects said specified number of items of reply information only from reply information that is included in reply-result information that was received by said reply-result-information-receiving means.

34. A tree-type network system that comprises an inquiry apparatus that sends inquiry information requesting that reply-result information be sent, and a plurality of processing apparatuses that receive said inquiry information, where said inquiry apparatus is connected to said plurality of processing apparatuses in a tree shape via communication paths so that said inquiry apparatus is the highest and said plurality of processing apparatuses form a plurality of layers, and said inquiry information that is sent from said inquiry apparatus is successively transferred from said processing apparatuses in a higher order to said processing apparatuses in a lower order, wherein
one of said processing apparatuses comprises:
an inquiry-information-receiving means for receiving said inquiry information that is sent from another said processing apparatus that is connected in a higher-order layer above said one processing apparatus or from said inquiry apparatus;
an inquiry-information-transfer means for transferring said received inquiry information to said other processing apparatuses that are connected in a lower-order layer below said one processing apparatus:
a reply-result-information-receiving means for receiving said reply-result information that includes reply information for said inquiry information and that is sent from said other processing apparatuses that are connected in said lower-order layer;
a reply-information-creation means for said one processing apparatus to create its own said reply-result information for said inquiry information;
a reply-result-information-creation means for said one processing apparatus to create its own reply-result information based on reply-result information received by said reply-result-information-receiving means, and reply information created by said reply-information-creation means; and
a reply-result-information-reply means for sending said created reply-result information to another said processing apparatus or to said inquiry apparatus that is connected in a higher-order layer and that is the transmission source of inquiry information that was received by said inquiry-information-receiving means; wherein
said inquiry apparatus comprises:
an inquiry-information-transmission means for sending said inquiry information to at least one or more of said processing apparatuses that are connected in a lower-order layer below said inquiry apparatus ; and
a reply-result-information means for receiving said reply-result information that is sent from at least one or more of said processing apparatuses that are connected in said lower-order layer.

35. The tree-type network system of claim 34 wherein said processing apparatus further comprises
a selection means for selecting a specified number of items of said reply information from among reply information that is included in said reply-result information that is received by said reply-result-information-receiving means, and reply information that is created by said reply-result-information-creation means; and wherein
said reply-result-information-creation means creates said reply-result information that includes said selected specified number of items of said reply information.

36. The tree-type network system of claim 35 wherein
said processing apparatus further comprises:
a total-number-information-acquisition means for acquiring the sum of the total number of said other processing apparatuses connected in said lower-order layer plus '1' as total-number information: and
a total-number-information-transmission means for sending said total-number information to said other processing apparatus or said inquiry apparatus that is the transmission source of inquiry information that was received by said inquiry-information-receiving means and that is connected in said higher-order layer; and wherein
said selection means selects said specified number of items of reply information based on said total-number information that was sent from said other processing apparatuses that are connected in said lower-order layer.

37. A processing program for a computer that is contained in a processing apparatus in a tree-type network system that comprises an inquiry apparatus that sends inquiry information requesting that reply-result information be sent, and a plurality of processing apparatuses that receive said inquiry information, where said inquiry apparatus is connected to said plurality of processing apparatuses in a tree shape via communication paths so that said inquiry apparatus is the highest and said plurality of processing apparatuses form a plurality of layers, and said inquiry information that is sent from said inquiry apparatus is successively transferred from said processing apparatuses in a higher order to said processing apparatuses in a lower order, wherein said program makes said computer of said processing apparatuses function as:
an inquiry-information-receiving means for receiving said inquiry information that is sent from another said processing apparatus that is connected in a higher-order layer above said one processing apparatus or from said inquiry apparatus;
an inquiry-information-transfer means for transferring said received inquiry information to one or more of said other processing apparatuses that are connected in a lower-order layer below said one processing apparatus:
a reply-result-information-receiving means for receiving said reply-result information that includes reply information for said inquiry information and that is sent from at least one or more of said other processing apparatuses that are connected in said lower-order layer ;
a reply-information-creation means for said one processing apparatus to create its own said reply-result information for said inquiry information:
a reply-result-information-creation means for said one processing apparatus to create its own reply-result information based on reply-result information received by said reply-result-information-receiving means, and reply information created by said reply-information-creation means:
and
a reply-result-information-reply means for sending said created reply-result information to another said processing apparatus or inquiry apparatus that is connected in a higher-order layer and that is the transmission source of inquiry information that was received by said inquiry-information-receiving means.

38. The processing program of claim 37 that further makes said computer function as
a selection means for selecting a specified number of items of said reply information from among reply information that is included in said reply-result information that is received by said reply-result-information-receiving means, and reply information that is created by said reply-result-information-creation means: and makes
said reply-result-information-creation means create said reply-result information that includes said selected specified number of items of said reply information.

39. The processing program of claim 38 that further makes said computer function as:
a total-number-information-acquisition means for acquiring the sum of the total number of said other processing apparatuses connected in said lower-order layer plus '1' as total-number information: and
a total-number-information-transmission means for sending said total-number information to said other processing apparatus or said inquiry apparatus that is the transmission source of inquiry information that was received by said inquiry-information-receiving means and that is connected in said higher-order layer: and makes
said selection means select said specified number of items of reply information based on said total-number information that was sent from said other processing apparatuses that are connected in said lower-order layer.

40. A recording medium on which said processing program of any one of the claims 37 to 39 is recorded so that it can be read by said computer.
